# EUROPEAN PATENT APPLICATION

(11) **EP 4 501 089 A1**
(43) Date of publication of application: **05.02.2025**
(21) Application number: 23779045.6
(22) Date of filing: 21.02.2023
(51) Int. Cl.: A01B 69/00

(54) **AGRICULTURAL WORK SUPPORT SYSTEM, AGRICULTURAL MACHINE, AGRICULTURAL WORK SUPPORT DEVICE, AND METHOD FOR CREATING TRAVEL ROUTE FOR AGRICULTURAL MACHINE**

(30) Priority: 31.03.2022 JP 2022059767
(71) Applicant: KUBOTA CORPORATION, Osaka-shi, Osaka 556-8601 (JP)
(72) Inventor: MORIMOTO, Takanori, Sakai-shi, Osaka 590-0908 (JP); YAMAGUCHI, Kotaro, Sakai-shi, Osaka 590-0908 (JP)
(74) Representative: Müller-Boré & Partner Patentanwälte PartG mbB
(86) International application number: PCT/JP2023/006161
(87) International publication number: WO 2023/189015

(57) **Abstract**

An agricultural work assistance system (100) includes: a route creator (51c) to create, on a map (MP2) indicating an agricultural field, a traveling route (L1) along which an agricultural machine (1) travels; and a mode selector (51d) to select either a first priority mode in which priority is placed on improving performance of agricultural work which the agricultural machine performs by a working device (2) while traveling based on the traveling route or a second priority mode in which priority is placed on improving efficiency of the agricultural work. During creation of the traveling route, the route creator (51c) continuously creates the traveling route so that, in a virtual work state where the agricultural machine has virtually performed the agricultural work by the working device while traveling based on the traveling route that has been already created, the agricultural machine is prevented from entering one of a virtual finished region (Vb) and a virtual unfinished region (Va) if the first priority mode is selected, and so that, in the virtual work state, the agricultural machine is allowed to enter the virtual finished region and enter the virtual unfinished region if the second priority mode is selected.

## Description

### Technical Field

The present invention relates to an agricultural work assistance system and an agricultural work assistance device that assist an agricultural machine in performing agricultural work by a working device coupled to the agricultural machine while traveling in an agricultural field, and an agricultural machine.

### Background Art

For example, Patent Literatures 1 and 2 disclose a technique of assisting an agricultural machine in performing agricultural work by a working device coupled to the agricultural machine while traveling in an agricultural field.

A controller provided in the agricultural machine disclosed in Patent Literature 1 sets a traveling route along which the agricultural machine performs agricultural work by the working device while automatically traveling in a central portion of the agricultural field displayed on a display and a headland around the central portion based on outer periphery position data of the agricultural field and a width of the agricultural machine.

A display controller provided in an agricultural field working machine disclosed in Patent Literature 2 displays a finished region where agricultural work has been already performed and an unfinished region where the agricultural work has not been performed yet in a distinguishable manner on an agricultural field displayed on a display based on a traveling track of the agricultural field working machine and working device information.

### Citation List

### Patent Literature

PTL 1: Japanese Unexamined Patent Application Publication No. 2018-39
PTL 2: Japanese Unexamined Patent Application Publication No. 2019-92409

### Summary of Invention

### Technical Problem

For example, in a case where a traveling route for an agricultural machine is set as disclosed in Patent Literature 1, the agricultural machine does not enter a finished region when the agricultural machine performs agricultural work by a working device while traveling based on the traveling route. This conveniently prevents the finished region from being trampled under a wheel of the agricultural machine and the like, thereby achieving good performance (visual quality, finish quality) of the agricultural work. However, for example, in a headland, behavior of the agricultural machine during turning sometimes becomes complicated since the agricultural machine is prevented not only from going beyond the agricultural field, but also from entering the finished region. This takes a lot of work time, thereby consuming fuel or electric power for driving the agricultural machine and others. This is inefficient and inconvenient.

The present invention was accomplished in view of the above problems, and an object of the present invention is to improve convenience in a case where an agricultural machine performs agricultural work by a working device while traveling in an agricultural field. Solution to Problem

Technical means of the present invention for solving the above technical problem has the following features.

An agricultural work assistance system according to an aspect of the present invention includes: a route creator to create, on a map indicating an agricultural field, a traveling route along which an agricultural machine travels; and a mode selector to select either a first priority mode in which priority is placed on improving performance of agricultural work which the agricultural machine performs on the agricultural field by a working device coupled to the agricultural machine while traveling based on the traveling route or a second priority mode in which priority is placed on improving efficiency of the agricultural work. The route creator is configured to: in a case where the first priority mode is selected by the mode selector, during creation of the traveling route, continuously create the traveling route so that, in a virtual work state where the agricultural machine has virtually performed the agricultural work by the working device while traveling based on the traveling route that has been already created, the agricultural machine is prevented (or prevented as much as possible (substantially)) from entering one of a virtual finished region where the agricultural work has been already performed and a virtual unfinished region where the agricultural work has not been performed yet, the one of the virtual finished region and the virtual unfinished region being determined according to a kind of the agricultural work; and in a case where the second priority mode is selected by the mode selector, during creation of the traveling route, continuously create the traveling route so that, in the virtual work state, the agricultural machine is allowed to enter the virtual finished region and enter the virtual unfinished region.

The route creator may be configured to: in a case where the first priority mode is selected by the mode selector, during creation of a plurality of work lines on the map to constitute the traveling route, sequentially create the work lines and adjust start positions or end positions of the respective work lines so that, in a virtual work state where the agricultural machine has virtually performed the agricultural work by the working device while traveling based on the work lines that have been already created, the agricultural machine is prevented (or prevented as much as possible) from entering one of the virtual finished region and the virtual unfinished region, the one of the virtual finished region and the virtual unfinished region being determined according to a kind of the agricultural work, and is caused to preferentially enter the other one of the virtual finished region and the virtual unfinished region; and in a case where the second priority mode is selected by the mode selector, during creation of the plurality of work lines on the map, sequentially create the work lines and adjust start positions or end positions of the respective work lines so that, in the virtual work state, the agricultural machine is allowed to enter the virtual finished region and enter the virtual unfinished region.

The route creator may be configured to, in a case where the second priority mode is selected by the mode selector, create the traveling route so that, in the virtual work state, the agricultural machine is caused to travel irrespective of whether it is in the virtual finished region or the virtual unfinished region, thereby avoiding (or avoiding as much as possible) occurrence of an unnecessary virtual unfinished region.

The route creator may be configured to, in a case where the first priority mode is selected by the mode selector and the agricultural work is ground work performed on soil of the agricultural field, during creation of the traveling route, continuously create the traveling route so that, in the virtual work state, the agricultural machine is prevented (or prevented as much as possible) from entering the virtual finished region and is caused to preferentially enter the virtual unfinished region.

In a case where the agricultural work is ground work performed on soil of the agricultural field, the route creator may be configured to: upon selection of the first priority mode by the mode selector, create the traveling route so that one portion and another portion of the traveling route are prevented (prevented as much as possible) from partially overlapping each other or becoming close to each other by less than a predetermined interval; and upon selection of the second priority mode by the mode selector, create the traveling route so that one portion and another portion of the traveling route are permitted to overlap each other or becoming close to each other by less than a predetermined interval.

The agricultural work assistance system may further include an area setter to set, on the map, a headland area and a central area located inside the headland area. The route creator may be configured to: create, in the headland area and the central area, the traveling route including a plurality of work lines in accordance with a selection result of the mode selector; and in a case where the second priority mode is selected by the mode selector, determine a start position of each work line created in the headland area between a contour of the agricultural field in the map and an outer contour of a region where the agricultural work is performed in the headland area.

The agricultural work assistance system may further include an area order selector to select in which of the headland area and the central area the agricultural work is performed earlier and in which of the headland area and the central area the agricultural work is performed later. The route creator may be configured to create the traveling route including the plurality of work lines in the headland area and the central area, and determine an order in which the agricultural machine travels along the plurality of work lines in accordance with selection results of the mode selector and the area order selector.

The agricultural work assistance system may further include an input unit by which a user performs input operation for designating either the first priority mode or the second priority mode. The mode selector may be configured to select either the first priority mode or the second priority mode in accordance with the input operation of the input unit.

The mode selector may be configured to select either the first priority mode or the second priority mode in accordance with a kind of the agricultural work performed by the working device.

The agricultural work assistance system may further include: a position detector to detect a position of the agricultural machine; and an automatic controller to perform automatic driving of performing the agricultural work on the agricultural field by the working device while automatically performing traveling and steering of the agricultural machine based on the position of the agricultural machine and the traveling route. The automatic controller may be configured or programmed to: in a case where the first priority mode is selected by the mode selector, during execution of the automatic driving in the agricultural field, cause the agricultural machine to avoid (or avoid as much as possible) entry thereof into one of a finished region where the agricultural work has been already performed and an unfinished region where the agricultural work has not been performed yet, the one of the finished region and the unfinished region being determined according to a kind of the agricultural work, and to enter and turn in the other one of the finished region and the unfinished region; and in a case where the second priority mode is selected by the mode selector, during execution of the automatic driving in the agricultural field, cause the agricultural machine to travel and turn irrespective of whether it is in the finished region or the unfinished region.

An agricultural work assistance device according to an aspect of the present invention includes: a route creator to create, on a map indicating an agricultural field, a traveling route along which an agricultural machine travels; a position detector to detect a position of the vehicle body; an automatic controller to perform automatic driving of performing agricultural work on the agricultural field by the working device while automatically performing traveling and steering of the vehicle body based on the position of the vehicle body and the traveling route; and a mode selector to select either a first priority mode in which priority is placed on improving performance of agricultural work which the agricultural machine performs on the agricultural field by a working device coupled to the agricultural machine while traveling based on the traveling route or a second priority mode in which priority is placed on improving efficiency of the agricultural work. The automatic controller is configured or programmed to: in a case where the first priority mode is selected by the mode selector, during execution of the automatic driving in the agricultural field, cause the vehicle body to avoid (or avoid as much as possible) entry thereof into one of a finished region where the agricultural work has been already performed and an unfinished region where the agricultural work has not been performed yet, the one of the finished region and the unfinished region being determined according to a kind of the agricultural work, and to enter and turn in the other one of the finished region and the unfinished region; and in a case where the second priority mode is selected by the mode selector, during execution of the automatic driving in the agricultural field, cause the vehicle body to travel and turn irrespective of whether it is in the finished region or the unfinished region.

An agricultural machine according to an aspect of the present invention includes: a vehicle body that is capable of traveling; a coupler to couple a working device to the vehicle body; a route creator to create, on a map indicating an agricultural field, a traveling route along which the vehicle body travels; and a mode selector to select either a first priority mode in which priority is placed on improving performance of agricultural work performed on the agricultural field by the working device coupled to the vehicle body while allowing the vehicle body to travel based on the traveling route or a second priority mode in which priority is placed on improving efficiency of the agricultural work. The route creator is configured to: in a case where the first priority mode is selected by the mode selector, during creation of the traveling route, continuously create the traveling route so that, in a virtual work state where the agricultural work has been virtually performed by the working device while allowing the vehicle body to travel based on the traveling route that has been already created, the vehicle body is prevented (or prevented as much as possible) from entering one of a virtual finished region where the agricultural work has been already performed and a virtual unfinished region where the agricultural work has not been performed yet, the one of the virtual finished region and the virtual unfinished region being determined according to a kind of the agricultural work; and in a case where the second priority mode is selected by the mode selector, during creation of the traveling route, continuously create the traveling route so that, in the virtual work state, the agricultural machine is allowed to enter the virtual finished region and enter the virtual unfinished region.

The agricultural machine may further include: a position detector to detect a position of the vehicle body; and an automatic controller to perform automatic driving of performing agricultural work on the agricultural field by the working device while automatically performing traveling and steering of the vehicle body based on the position of the vehicle body and the traveling route. The automatic controller may be configured or programmed to: in a case where the first priority mode is selected by the mode selector, during execution of the automatic driving in the agricultural field, cause the vehicle body to avoid (or avoid as much as possible) entry thereof into one of a finished region where the agricultural work has been already performed and an unfinished region where the agricultural work has not been performed yet, the one of the finished region and the unfinished region being determined according to a kind of the agricultural work, and to enter and turn in the other one of the finished region and the unfinished region; and in a case where the second priority mode is selected by the mode selector, during execution of the automatic driving in the agricultural field, cause the vehicle body to travel and turn irrespective of whether it is in the finished region or the unfinished region.

An agricultural machine according to an aspect of the present invention includes: a vehicle body that is capable of traveling; a coupler to couple a working device to the vehicle body; a route creator to create, on a map indicating an agricultural field, a traveling route along which the vehicle body travels; and a mode selector to select either a first priority mode in which priority is placed on improving performance of agricultural work performed on the agricultural field by the working device coupled to the vehicle body while allowing the vehicle body to travel based on the traveling route or a second priority mode in which priority is placed on improving efficiency of the agricultural work. The route creator is configured to: in a case where the first priority mode is selected by the mode selector, during creation of the traveling route, continuously create the traveling route so that, in a virtual work state where the agricultural work has been virtually performed by the working device while allowing the vehicle body to travel based on the traveling route that has been already created, the vehicle body is prevented from entering one of a virtual finished region where the agricultural work has been already performed and a virtual unfinished region where the agricultural work has not been performed yet, the one of the virtual finished region and the virtual unfinished region being determined according to a kind of the agricultural work; and in a case where the second priority mode is selected by the mode selector, during creation of the traveling route, continuously create the traveling route so that, in the virtual work state, the agricultural machine is allowed to enter the virtual finished region and enter the virtual unfinished region.

An agricultural work assistance device according to an aspect of the present invention includes: a route creator to create, on a map indicating an agricultural field, a traveling route along which an agricultural machine travels; and a mode selector to select either a first priority mode in which priority is placed on improving performance of agricultural work which the agricultural machine performs on the agricultural field by a working device coupled to the agricultural machine while traveling based on the traveling route or a second priority mode in which priority is placed on improving efficiency of the agricultural work. The route creator is configured to: in a case where the first priority mode is selected by the mode selector, during creation of the traveling route, continuously create the traveling route so that, in a virtual work state where the agricultural machine has virtually performed the agricultural work by the working device while traveling based on the traveling route that has been already created, the agricultural machine is prevented (or prevented as much as possible) from entering one of a virtual finished region where the agricultural work has been already performed and a virtual unfinished region where the agricultural work has not been performed yet, the one of the virtual finished region and the virtual unfinished region being determined according to a kind of the agricultural work; and in a case where the second priority mode is selected by the mode selector, during creation of the traveling route, continuously create the traveling route so that, in the virtual work state, the agricultural machine is allowed to enter the virtual finished region and enter the virtual unfinished region.

A method according to an aspect of the present invention is to create, on a map indicating an agricultural field, a traveling route along which an agricultural machine travels to perform agricultural work on the agricultural field by a working device coupled to the agricultural machine. The method includes: causing a mode selector to select, as a mode in which the agricultural machine performs the agricultural work by the working device while traveling, either a first priority mode in which priority is placed on improving performance of the agricultural work or a second priority mode in which priority is placed on improving efficiency of the agricultural work; and causing a route creator to create the traveling route on the map. In a case where the first priority mode is selected by the mode selector, during creation of the traveling route, the route creator is caused to continuously create the traveling route so that, in a virtual work state where the agricultural machine has virtually performed the agricultural work by the working device while traveling based on the traveling route that has been already created, the agricultural machine is prevented (or prevented as much as possible) from entering one of a virtual finished region where the agricultural work has been already performed and a virtual unfinished region where the agricultural work has not been performed yet, the one of the virtual finished region and the virtual unfinished region being determined according to a kind of the agricultural work. In a case where the second priority mode is selected by the mode selector, during creation of the traveling route, the route creator is caused to continuously create the traveling route so that, in the virtual work state, the agricultural machine is allowed to enter the virtual finished region and enter the virtual unfinished region. Advantageous Effects of Invention

According to the present invention, it is possible to improve convenience in a case where an agricultural machine performs agricultural work by a working device while traveling in an agricultural field.

### Brief Description of Drawings

[FIG. 1] FIG. 1 is a configuration diagram of an agricultural work assistance system.
[FIG. 2] FIG. 2 is a perspective view of a raising/lowering device.
[FIG. 3A] FIG. 3A is a view for explaining automatic driving of an agricultural machine.
[FIG. 3B] FIG. 3B is a view for explaining automatic driving of the agricultural machine.
[FIG. 3C] FIG. 3C is a view for explaining automatic driving of the agricultural machine.
[FIG. 3D] FIG. 3D is a view for explaining automatic driving of the agricultural machine.
[FIG. 4] FIG. 4 illustrates an example of a work selection screen.
[FIG. 5] FIG. 5 illustrates an example of a device confirmation screen.
[FIG. 6] FIG. 6 illustrates an example of an agricultural field selection screen.
[FIG. 7] FIG. 7 illustrates an example of a route creation 1 screen.
[FIG. 8A] FIG. 8A illustrates an example of a route creation 2 screen.
[FIG. 8B] FIG. 8B illustrates an example of the route creation 2 screen.
[FIG. 9A] FIG. 9A illustrates an example of a traveling control screen displayed in a case where a performance priority mode is selected.
[FIG. 9B] FIG. 9B illustrates an example of a traveling control screen displayed in a case where an efficiency priority mode is selected.
[FIG. 10] FIG. 10 is a flowchart illustrating a procedure of creating a traveling route.
[FIG. 11] FIG. 11 illustrates a correspondence relationship between a priority mode and an entry state of the agricultural machine into a region.
[FIG. 12] FIG. 12 illustrates an example of a central area and a headland area on an agricultural field map.
[FIG. 13A] FIG. 13A illustrates an example of a traveling route created in a case where the performance priority mode is selected.
[FIG. 13B] FIG. 13B illustrates an example of a traveling route created in a case where the performance priority mode is selected.
[FIG. 13C] FIG. 13C illustrates an example of a traveling route created in a case where the performance priority mode is selected.
[FIG. 13D] FIG. 13D illustrates an example of a traveling route created in a case where the performance priority mode is selected.
[FIG. 14A] FIG. 14A illustrates an example of a work state during automatic driving of the agricultural machine in a case where the performance priority mode is selected.
[FIG. 14B] FIG. 14B illustrates an example of a work state during automatic driving of the agricultural machine in a case where the performance priority mode is selected.
[FIG. 15A] FIG. 15A illustrates an example of a traveling route created in a case where the efficiency priority mode is selected.
[FIG. 15B] FIG. 15B illustrates an example of a traveling route created in a case where the efficiency priority mode is selected.
[FIG. 15C] FIG. 15C illustrates an example of a traveling route created in a case where the efficiency priority mode is selected.
[FIG. 15D] FIG. 15D illustrates an example of a traveling route created in a case where the efficiency priority mode is selected.
[FIG. 16A] FIG. 16A illustrates an example of a work state during automatic driving of the agricultural machine in a case where the efficiency priority mode is selected.
[FIG. 16B] FIG. 16B illustrates an example of a work state during automatic driving of the agricultural machine in a case where the efficiency priority mode is selected.
[FIG. 17A] FIG. 17A illustrates another example of a traveling route and a work state during automatic driving of the agricultural machine in a case where the performance priority mode is selected.
[FIG. 17B] FIG. 17B illustrates another example of a traveling route and a work state during automatic driving of the agricultural machine in a case where the performance priority mode is selected.
[FIG. 18A] FIG. 18A illustrates another example of a traveling route and a work state during automatic driving of the agricultural machine in a case where the efficiency priority mode is selected.
[FIG. 18B] FIG. 18B illustrates another example of a traveling route and a work state during automatic driving of the agricultural machine in a case where the efficiency priority mode is selected.
[FIG. 19] FIG. 19 illustrates a correspondence relationship between a priority mode and a kind of agricultural work.
[FIG. 20] FIG. 20 is a side view of the agricultural machine.

### Description of Embodiments

An embodiment of the present invention is described below with reference to the drawings.

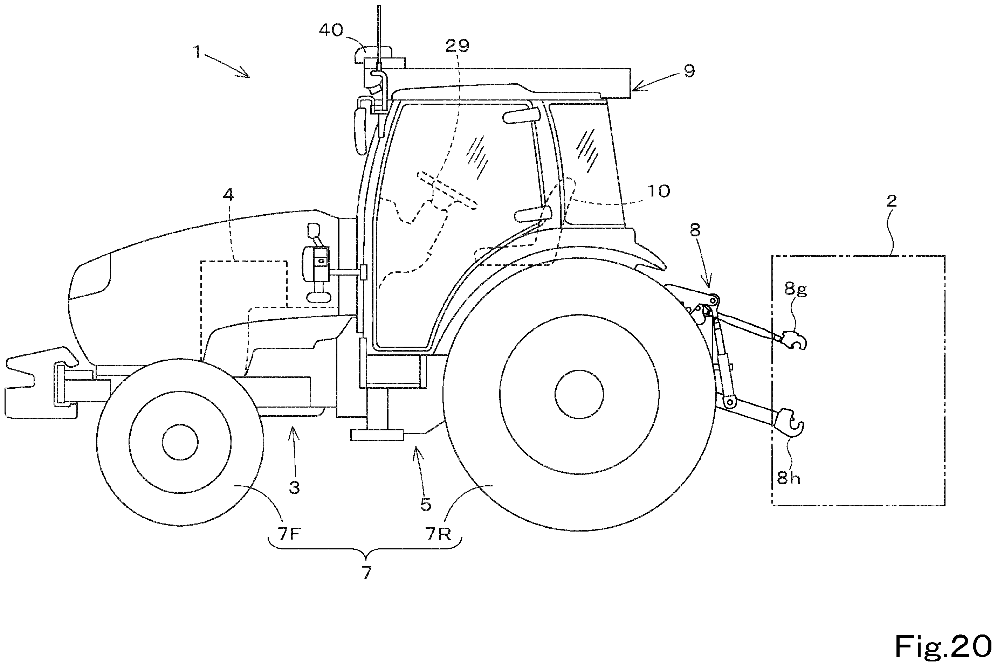

First, an agricultural machine 1 of the present embodiment is described. FIG. 20 is a side view of the agricultural machine 1. The agricultural machine 1 is a tractor. Note that the agricultural machine of the present invention is not limited to a tractor and may be another agricultural machine such as a rice planter or a combine or may be a working vehicle other than a tractor that performs agricultural work.

The agricultural machine 1 includes a traveling body 3, a prime mover 4, a transmission 5, and a traveling device 7. A front wheel 7F of the traveling device 7 may be a tire type or may be a crawler type. Similarly, a rear wheel 7R of the traveling device 7 may be a tire type or may be a crawler type. The prime mover 4 is a diesel engine, an electric motor, or the like. In the present embodiment, the prime mover 4 is a diesel engine. The transmission 5 can switch propulsion force of the traveling device 7 by changing speed stages and can switch forward traveling and rearward traveling of the traveling device 7. Driving force of the prime mover 4 is transmitted to the traveling device 7 by the transmission 5 and drives the traveling device 7, and thereby the traveling body 3 travels forward or rearward. Note that the leftward direction of FIG. 20 is a forward direction for the traveling body 3, and the rightward direction of FIG. 20 is a rearward direction for the traveling body 3. The direction toward a deep side of FIG. 20 is a rightward direction for the traveling body 3, and the direction toward the near side of FIG. 20 is a leftward direction for the traveling body 3.

The traveling body 3 is provided with a cabin 9. An operator's seat 10 is provided in the cabin 9. A raising/lowering device 8 that is a three-point linkage or the like is provided on a rear portion of the traveling body 3. To the raising/lowering device 8, a working device 2 for performing agricultural work can be coupled. Specifically, the working device 2 can be coupled to couplers 8g and 8h of the raising/lowering device 8. By coupling the working device 2 to the couplers 8g and 8h, the working device 2 and the traveling body 3 (the agricultural machine 1) are coupled, and thereby the working device 2 can be towed by the traveling body 3.

The working device 2 performs ground work on an agricultural field. Examples of the working device 2 include a cultivator (rotary cultivator) that performs cultivating work on the agricultural field, a stubble cultivator that performs stubble cultivation, a puddling device (drive harrow) that performs puddling, a spreader that spreads a fertilizer, an agricultural chemical, or the like, a seeding device that sows seeds, a transplanter that transplants seedlings, and a harvester for harvesting.

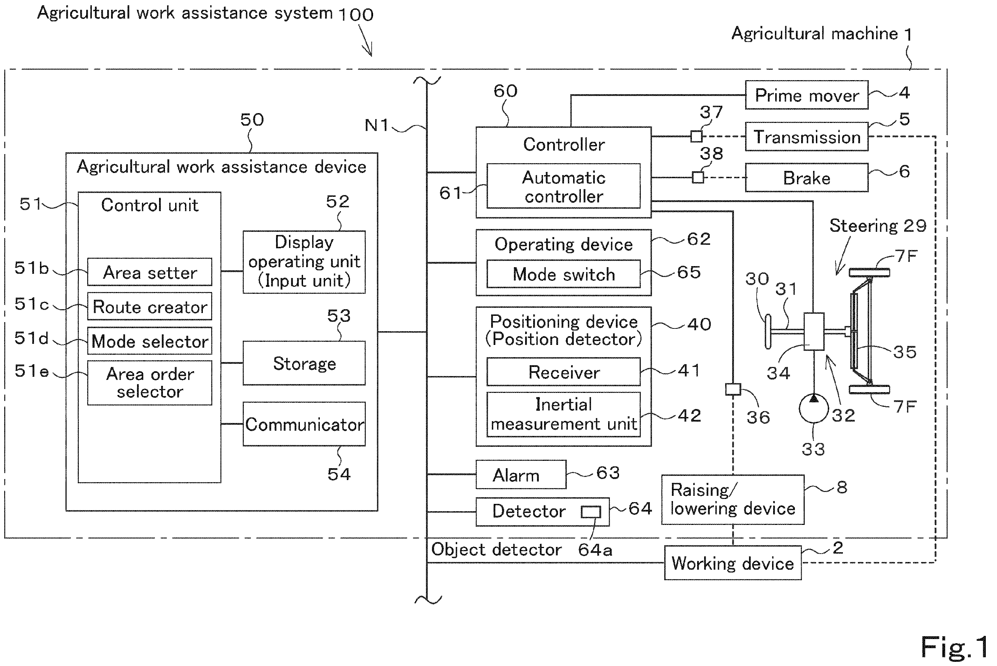

Next, an agricultural work assistance system 100 according to the present embodiment is described. FIG. 1 is a configuration diagram of the agricultural work assistance system 100. The agricultural work assistance system 100 includes an agricultural work assistance device 50. The agricultural work assistance system 100 and the agricultural work assistance device 50 assist the agricultural machine 1 in performing agricultural work by the working device 2 while traveling in an agricultural field.

The agricultural machine 1 includes a controller 60, an operating device 62, the prime mover 4, the transmission 5, a brake 6, a steering 29, the raising/lowering device 8, a positioning device 40, an alarm 63, and a detector 64. An in-vehicle network N1 such as a LAN or a CAN is constructed in the agricultural machine 1. The controller 60, the operating device 62, the positioning device 40, the alarm 63, and the detector 64 are connected to the in-vehicle network N1. Each of these units of the agricultural machine 1 is included in the agricultural work assistance system 100.

The controller 60 includes an electric circuit including a CPU (or a microcomputer) and a memory. The memory of the controller 60 includes a volatile memory and a nonvolatile memory. The controller 60 controls operation of each unit of the agricultural machine 1. The controller 60 includes an automatic controller 61 that controls traveling of the agricultural machine 1 and operation of the working device 2. The operating device 62 includes a switch, a lever, a pedal, and other keys that can be operated by a user (operator) such as a driver sitting on the operator's seat 10 or a worker present close to the agricultural machine 1. The operating device 62 includes a mode switch 65. The mode switch 65 is operated to switch a mode of the agricultural machine 1.

Driving, stoppage, and a rotational speed of the prime mover 4 (engine) are controlled by the controller 60. The transmission 5 is connected to a control valve 37. The control valve 37 is a solenoid valve that operates based on a control signal transmitted from the controller 60. To the control valve 37, a hydraulic fluid delivered from a hydraulic pump 33 is supplied. Although the control valve 37 is illustrated as a single block in FIG. 1, an appropriate number of control valves 37 are provided corresponding to the number of hydraulic devices such as a hydraulic clutch or a hydraulic cylinder provided in the transmission 5.

The brake 6 is connected to a control valve 38. The control valve 38 is a solenoid valve that operates based on a control signal transmitted from the controller 60. To the control valve 38, a hydraulic fluid delivered from the hydraulic pump 33 is supplied. The automatic controller 61 causes the brake 6 to operate by electrically controlling a switching position and an opening of the control valve 38 and thereby brakes the traveling body 3.

The automatic controller 61 controls driving of the transmission 5 by electrically controlling a switching position (an opening) of the control valve 37. The transmission 5 transmits driving force of the prime mover 4 to the traveling device 7, and thereby the traveling device 7 operates. As a result, the traveling body 3 travels forward or rearward. For example, in a case where the working device 2 performs ground work, the transmission 5 transmits the driving force of the prime mover 4 to the working device 2. This increases operating force of the working device 2.

The automatic controller 61 communicates with the working device 2 over the in-vehicle network N1. Specifically, the working device 2 includes a control unit and a communicator (not illustrated). The automatic controller 61 transmits a work command to the working device 2 over the in-vehicle network N1. Upon receipt of the work command by the communicator, the control unit of the working device 2 controls operation of each unit of the working device 2 based on the work command to perform agricultural work (ground work). Furthermore, the control unit of the working device 2 causes the communicator to transmit information or data indicative of a work state or the like to the controller 60 over the in-vehicle network N1. The automatic controller 61 detects the work state or the like of the working device 2 based on the information or data received from the working device 2 over the in-vehicle network N1.

Note that the working device 2 may be configured not to include the control unit and the communicator. In the case of such a working device 2, the automatic controller 61 does not communicate with the working device 2 over the in-vehicle network N1, but controls operation of the working device 2 and detects a work state or the like of the working device 2 by raising or lowering the working device 2 by the raising/lowering device 8 and thereby changing the position of the working device 2, as described later.

The steering 29 includes a steering wheel 30, a steering shaft (rotary shaft) 31, and an assist mechanism (power steering mechanism) 32. The steering wheel 30 is provided in the cabin 9 (FIG. 20). The steering shaft 31 rotates in accordance with rotation of the steering wheel 30. The assist mechanism 32 assists steering using the steering wheel 30.

The assist mechanism 32 includes a control valve 34 and a steering cylinder 35. The control valve 34 is a solenoid valve that operates based on a control signal transmitted from the controller 60. Specifically, the control valve 34 is a three-position switching valve that can be switched by movement of a spool or the like. To the control valve 34, a hydraulic fluid delivered from the hydraulic pump 33 is supplied. The controller 60 adjusts a hydraulic pressure supplied to the steering cylinder 35 by electrically controlling a switching position and an opening of the control valve 34 and thereby extends and contracts the steering cylinder 35. The steering cylinder 35 is connected to knuckle arms 39 that change a direction of the front wheel 7F.

The control valve 34 can also be switched by steering of the steering shaft 31. Specifically, by operating the steering wheel 30, the steering shaft 31 rotates in accordance with a state of the operation, and thus the switching position and the opening of the control valve 34 are switched. The steering cylinder 35 extends or contracts leftward or rightward of the traveling body 3 in accordance with the switching position and the opening of the control valve 34. By this extending or contracting action of the steering cylinder 35, a steering direction of the front wheel 7F is changed. Note that the steering 29 described above is an example and is not limited to the above configuration.

The traveling body 3 of the agricultural machine 1 can be steered manually by manual operation of the steering wheel 30 and can be steered automatically by the automatic controller 61. The transmission 5 or the brake 6 is driven in accordance with manual operation of an accelerating member or a braking member (both of which are not illustrated) included in the operating device 62, and thereby the traveling body 3 can travel and stop. Furthermore, the traveling body 3 can automatically travel and stop in accordance with control of the transmission 5 and the brake 6 by the automatic controller 61. That is, the agricultural machine 1 can perform manual driving in which a user (driver) performs traveling operation and steering operation, automatic driving in which the automatic controller 61 automatically performs traveling and steering, and auto-steering control (also called automatic steering control or semiautomatic driving) in which the automatic controller 61 automatically performs steering and the user performs traveling operation.

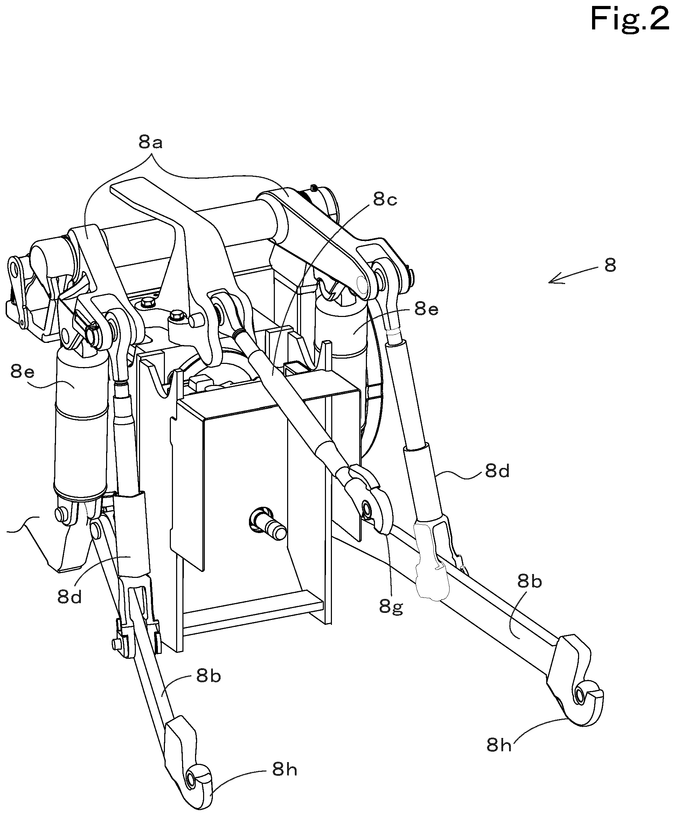

FIG. 2 is a perspective view of the raising/lowering device 8. The raising/lowering device 8 includes a lift arm 8a, a lower link 8b, a top link 8c, a lift rod 8d, and a lift cylinder 8e. A front end portion of the lift arm 8a is supported on an upper rear portion of a case (transmission case) in which the transmission 5 is contained so as to be swingable up or down. The lift arm 8a is swung (raised and lowered) by driving of the lift cylinder 8e. The lift cylinder 8e is a hydraulic cylinder. The lift cylinder 8e is connected to a control valve 36 (FIG. 1). The control valve 36 is a solenoid valve that operates based on a control signal transmitted from the controller 60. To the control valve 36, a hydraulic fluid delivered from the hydraulic pump 33 is supplied.

A front end portion of the lower link 8b illustrated in FIG. 2 is supported on a lower rear portion of the transmission 5 (FIGS. 1 and 20) so as to be swingable up or down. A front end portion of the top link 8c is supported on a rear portion of the transmission 5 above the lower link 8b so as to be swingable up or down. The lift rod 8d couples the lift arm 8a and the lower link 8b. The couplers 8g and 8h that can couple the working device 2 are provided at rear end portions of the lower link 8b and the top link 8c.

The automatic controller 61 (FIG. 1) adjusts a hydraulic pressure supplied to the lift cylinder 8e illustrated in FIG. 2 by electrically controlling a switching position and an opening of the control valve 36 and thereby extends or contracts the lift cylinder 8e. When the lift cylinder 8e extends or contracts, the lift arm 8a rises or lowers, and the lower link 8b coupled to the lift arm 8a with the lift rod 8d interposed therebetween rises or lowers. As a result, the working device 2 swings up or down (rises or lowers) about a front portion (opposite to the couplers 8g and 8h) of the lower link 8b.

The positioning device 40 illustrated in FIG. 1 includes a receiver 41 and an inertial measurement unit (IMU) 42. The receiver 41 receives a satellite signal (a position of a positioning satellite, a transmission time, correction information, and the like) transmitted from a satellite positioning system (positioning satellite) such as D-GPS, GPS, GLONASS, BeiDou, Galileo, or Michibiki. The positioning device 40 detects a current position (e.g., latitude and longitude) based on the satellite signal received by the receiver 41. That is, the positioning device 40 is a position detector that detects a position of the traveling body 3 of the agricultural machine 1. The inertial measurement unit 42 includes an acceleration sensor, a gyroscope sensor, and the like. The inertial measurement unit 42 detects a roll angle, a pitch angle, a yaw angle, and the like of the traveling body 3. The alarm 63 includes a buzzer, a speaker, a warning light, or the like provided in the traveling body 3. The alarm 63 issues an alarm to surroundings of the traveling body 3 by sound or light.

The detector 64 includes a sensor and the like (which may include a camera) installed at portions of the agricultural machine 1 and the working device 2. The detector 64 detects operating states (driving and stoppage states, an operation position, and the like) of the units such as the transmission 5, the brake 6, the traveling device 7, the raising/lowering device 8, the steering 29, and the operating device 62 of the agricultural machine 1 based on an output signal from the sensor or the like. Furthermore, the detector 64 detects an operating state of the working device 2 based on an output signal from the sensor or the like. Furthermore, the detector 64 includes an object detector 64a, a laser sensor such as LiDAR, an ultrasonic sensor, and the like. The laser sensor, the ultrasonic sensor, and the like are installed on a front portion, a rear portion, and left and right side portions of the traveling body 3. The object detector 64a detects presence or absence of an object around the agricultural machine 1, a distance to the object, and the like based on an output signal from the laser sensor or the ultrasonic sensor.

The agricultural work assistance device 50 is, for example, a mobile tablet terminal device. The agricultural work assistance device 50 is, for example, mounted inside the cabin 9 of the agricultural machine 1 and is attachable and detachable to and from the agricultural machine 1. That is, the agricultural machine 1 includes the agricultural work assistance device 50.

The agricultural work assistance device 50 includes a control unit 51, a display operating unit 52, a storage 53, and a communicator 54. The control unit 51 includes a CPU (or a microcomputer), a volatile memory, and a nonvolatile memory. The control unit 51 controls each unit of the agricultural work assistance device 50. The control unit 51 includes an area setter 51b, a route creator 51c, a mode selector 51d, and an area order selector 51e. Although each of these units is a software program in this example, each of these units may be hardware such as a semiconductor element such as an ASIC or an electric circuit in another example.

The display operating unit 52 is a touch panel and displays various kinds of information on a screen. Furthermore, by performing a predetermined operation on a display screen of the display operating unit 52, various inputs can be performed. The display operating unit 52 is a display unit, an operating unit, an output unit, and an input unit. Instead of the display operating unit 52, independent display unit, operating unit, output unit, and input unit may be provided in the agricultural work assistance device 50.

The storage 53 is a nonvolatile memory or the like. In the storage 53, information or data for assisting traveling and work of the agricultural machine 1 are stored in a readable and writable manner. The communicator 54 is an interface for connection with the in-vehicle network N1. The control unit 51 communicates with the controller 60, the operating device 62, the positioning device 40, the alarm 63, the detector 64, and the working device 2 over the in-vehicle network N1 by using the communicator 54. The communicator 54 is an output unit that outputs (transmits) information and data to the controller 60 of the agricultural machine 1.

The area setter 51b sets a headland area and a central area located inside the headland area on a map indicating an agricultural field registered in advance in the agricultural work assistance device 50. The route creator 51c creates a traveling route along which the agricultural machine 1 travels on the map indicating the agricultural field. The mode selector 51d selects either a first priority mode in which priority is placed on improving performance of agricultural work which the agricultural machine 1 performs on the agricultural field by the working device 2 coupled to the agricultural machine 1 while traveling based on the traveling route created by the route creator 51c or a second priority mode in which priority is placed on improving efficiency of the agricultural work. The area order selector 51e selects in which of the headland area and the central area set by the area setter 51b agricultural work is performed earlier by the agricultural machine 1 and the working device 2 and in which of the headland area and the central area, the agricultural work is performed later.

The route creator 51c creates a traveling route on the map indicating the agricultural field based on agricultural field information concerning the agricultural field stored in advance in the storage 53, dimension information concerning dimensions and the like of the agricultural machine 1 and the working device 2, and selection results of the mode selector 51d and the area order selector 5 1e. The control unit 51 causes the communicator 54 to transmit information such as the agricultural field information, and the dimension information of the agricultural machine 1 and the working device 2, and information indicative of the traveling route to the controller 60 of the agricultural machine 1. The automatic controller 61 of the controller 60 controls driving of the prime mover 4, the transmission 5, the brake 6, the steering 29, the raising/lowering device 8, and the working device 2 based on the agricultural field information, the dimension information of the agricultural machine 1 and the working device 2, the traveling route, and a position of the agricultural machine 1 (the traveling body 3) detected by the positioning device 40, a detection result of the detector 64, and the like, and performs automatic driving in which agricultural work (ground work) is performed on the agricultural field by the working device 2 while automatically performing traveling and steering of the agricultural machine 1 (the traveling body 3).

The automatic controller 61 can also perform auto-steering driving in which agricultural work is performed on the agricultural field by the working device 2 while automatically steering the agricultural machine 1 and leaving traveling of the agricultural machine 1 (the traveling body 3) to manual operation based on the information described above. In the auto-steering driving, the traveling speed of the traveling body 3 is changed in response to driver's operation of the accelerating member and the braking member included in the operating device 62 (FIG. 1).

Traveling and steering of the agricultural machine 1 can also be performed by manual driving, and agricultural work can be performed by the working device 2 during the manual traveling. The manual driving of the agricultural machine 1 means that the driver changes the traveling speed of the traveling body 3 by operating the accelerating member or the braking member of the operating device 62 and steers the traveling body 3 by operating the steering wheel 30 (FIG. 1).

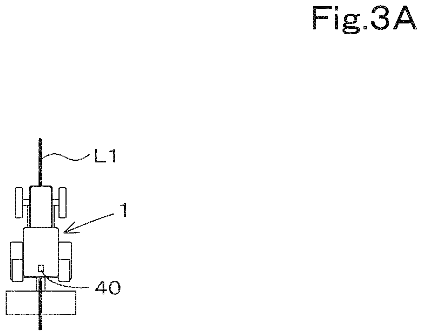

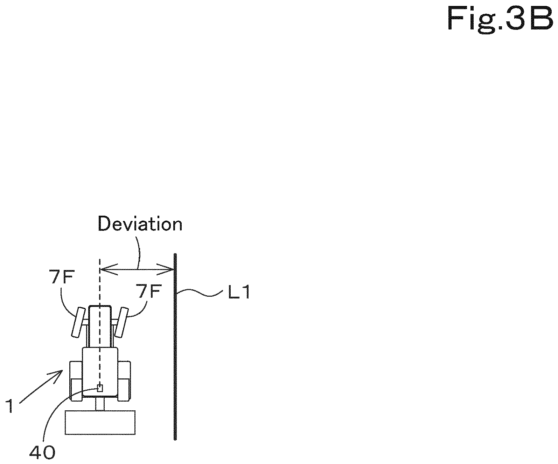

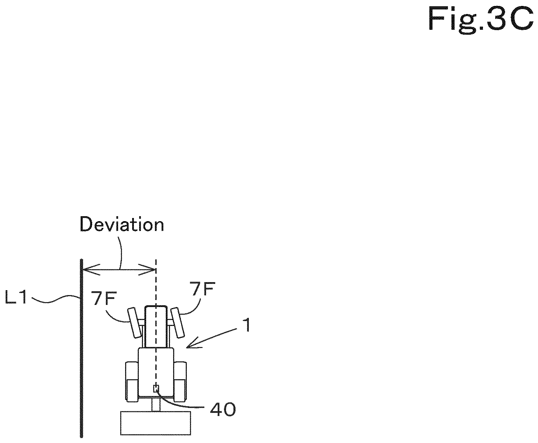

FIGS. 3A to 3D are views for explaining automatic steering of the agricultural machine 1. The automatic controller 61 performs automatic steering of the agricultural machine 1 as follows during execution of automatic driving and auto-steering driving of the agricultural machine 1. First, the automatic controller 61 calculates a deviation between the position of the traveling body 3 detected by the positioning device 40 and a traveling route L1 created by the route creator 51c. In a case where the deviation is less than a threshold value (for example, FIG. 3A), the automatic controller 61 maintains a rotation angle of the steering shaft 31 (FIG. 1). In a case where the deviation between the position of the traveling body 3 and the traveling route L1 is equal to or larger than the threshold value and the traveling body 3 is located on the left relative to the traveling route L1 (for example, FIG. 3B), the automatic controller 61 rotates the steering shaft 31 so that the traveling body 3 is steered rightward. In a case where the deviation between the position of the traveling body 3 and the traveling route L1 is equal to or larger than the threshold value and the traveling body 3 is located on the right relative to the traveling route L1 (for example, FIG. 3C), the automatic controller 61 rotates the steering shaft 31 so that the traveling body 3 is steered leftward.

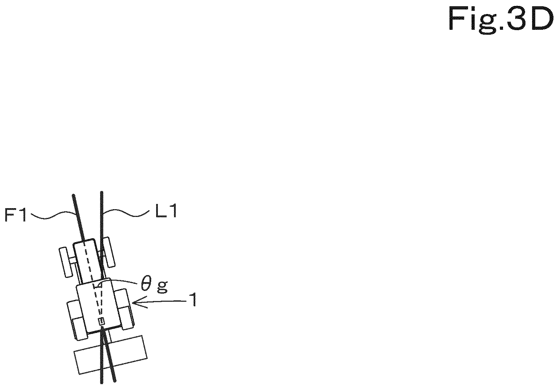

Although the steering angle of the steering 29 is changed based on the deviation between the position of the traveling body 3 and the traveling route L1 in the above example, the steering angle of the steering 29 may be changed based on an angle θg of a traveling direction F1 of the traveling body 3 with respect to the traveling route L1 illustrated in FIG. 3D in another example. In this case, for example, the automatic controller 61 calculates the traveling direction F1 of the traveling body 3 from a change of the position of the traveling body 3 and further calculates the angle θg of the traveling direction F1 with respect to the traveling route L1. Then, in a case where the angle θg is equal to or larger than the threshold value, the automatic controller 61 rotates the steering shaft 31 so that the traveling direction F1 of the traveling body 3 matches a direction of the traveling route L1 (that is, θg becomes "0°").

In another example, the automatic controller 61 may calculate a first steering angle based on the deviation between the position of the traveling body 3 and the traveling route L1 and calculate a second steering angle based on the traveling route L1 and the traveling direction F1 of the traveling body 3. Then, the automatic controller 61 may calculate a third steering angle based on the first steering angle and the second steering angle and rotate the steering shaft 31 based on the third steering angle.

Furthermore, the automatic controller 61 calculates an actual vehicle speed of the traveling body 3 based on a change of the position of the traveling body 3 while the traveling body 3 is automatically traveling based on the traveling route L1. The automatic controller 61 controls driving of the transmission 5, the brake 6, and the prime mover 4 so that the actual vehicle speed matches a vehicle speed associated with the traveling route L1. The association of the traveling route L1 and the vehicle speed is performed by the control unit 51 of the agricultural work assistance device 50.

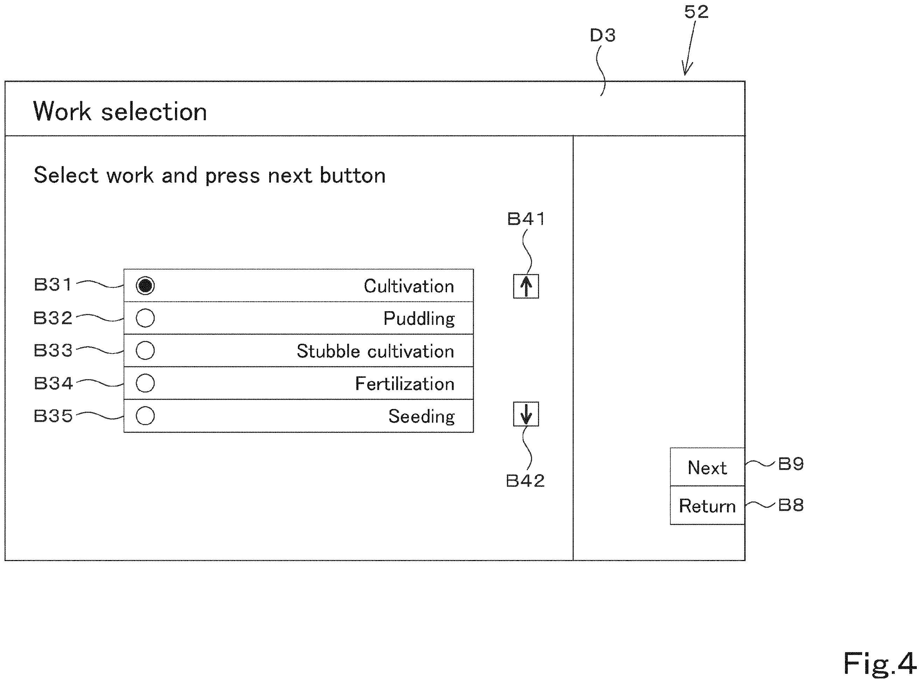

Next, operation of each unit of the agricultural work assistance system 100 is described in detail. After activating the agricultural work assistance device 50, the user selects automatic driving of the agricultural machine 1 by performing predetermined input operation on the display operating unit 52. In response to this, the control unit 51 causes a work selection screen D3 illustrated in FIG. 4 to be displayed on the display operating unit 52. Data of the work selection screen D3 and data of screens that will be described later are stored in the storage 53. The control unit 51 reads out data from the storage 53 as needed and causes a screen based on the data to be displayed on the display operating unit 52.

On the work selection screen D3, a message indicative of an input operation procedure is displayed. Furthermore, on the work selection screen D3, a plurality of work keys B31 to B35, an up arrow key B41, a down arrow key B42, a next key B9, and a return key B8 are displayed. The work keys B31 to B35 are keys indicative of agricultural work that can be performed by the agricultural machine 1 and the working device 2 coupled to the agricultural machine 1. Although the five work keys B31, B32, B33, B34, and B35 are displayed in FIG. 4, the control unit 51 causes a work key indicative of another work to be displayed on the work selection screen D3 in response to operator's selection of the up arrow key B41 or the down arrow key B42 in a case where there are six or more kinds of agricultural work that can be performed by the agricultural machine 1 and the working device 2. The next key B9 is operated to proceed to a next setting screen. The return key B8 is operated to return to a previous setting screen.

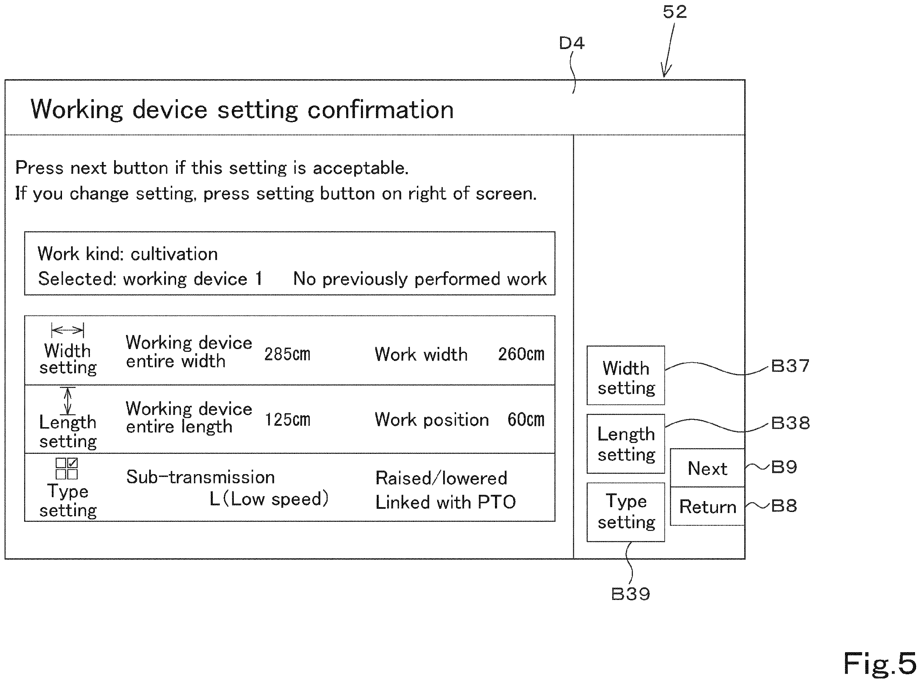

When the user selects (taps) any of the work keys B31 to B35, the control unit 51 causes the selected work key to be displayed on the work selection screen D3 in a display form different from other work keys. In the example of FIG. 4, only the selected cultivation work key B31 is given a black circle mark. When the operator selects the next key B9 and performs predetermined input operation in a state where any of the work keys B31, B32, B33, B34, and B35 is being selected, the control unit 51 causes a device confirmation screen illustrated in FIG. 5 to be displayed on the display operating unit 52.

On the device confirmation screen D4, a message indicative of an input operation procedure, device-specific information of the working device 2 coupled to the agricultural machine 1, setting keys B37 to B39, a next key B9, and a return key B8 are displayed. The device-specific information of the working device 2 is stored in advance in the storage 53. The device-specific information of the working device 2 includes a name of the working device 2, whether or not there is work previously performed by the working device 2, the dimension information of the working device 2, and a type of the working device 2.

In the storage 53, device-specific information of the working devices 2 for other agricultural works other than the working device 2 for cultivation work illustrated in FIG. 5 is also stored. The control unit 51 determines the working device 2 for the agricultural work selected on the work selection screen D3 of FIG. 4, reads out the device-specific information of the working device 2 from the storage 53, and causes the device-specific information to be displayed on the device confirmation screen D4 of FIG. 5. In the storage 53, information (information concerning specifications such as a name, dimension information, and a type) specific to the agricultural machine 1 registered in advance is also stored.

As illustrated in FIG. 5, the dimension information of the working device 2 includes an entire width, a work width, an entire length, and a work position of the working device 2. The type of the working device 2 includes a speed stage of a sub-transmission (not illustrated) for driving the working device 2 that is a cultivator to rotate, whether or not the working device 2 is raised or lowered by the raising/lowering device 8, and whether or not the agricultural machine 1 is linked with PTO (Power take-off).

The setting keys B37 to B39 are keys for setting and changing the dimension information and type of the working device 2. Specifically, the user can input and change setting values of the entire width and the work width of the working device 2 by selecting the width setting key B37 and performing predetermined input operation. The entire width of the working device 2 refers to a width of an external shape in a left-right direction perpendicular to a front-rear direction and an up-down direction of the agricultural machine 1. The user can input and change setting values of the entire length and the work position of the working device 2 by selecting the length setting key B38 and performing predetermined input operation. The entire length of the working device 2 is a length from a coupling position where the working device 2 is coupled with the lower link 8b (FIG. 2) of the raising/lowering device 8 to a rear end of the working device 2 (an end opposite to the traveling body 3 of the agricultural machine 1). The work position of the working device 2 is a length from the coupling position where the working device 2 is coupled with the lower link 8b to a front end position of a work member that can perform ground work (an end of a portion that can perform work on the traveling body 3 side).

Furthermore, the user can input and change, as a speed stage of the sub-transmission, a low-speed stage (L (low speed)) or a medium-speed stage (M (medium speed)) by selecting the type setting key B39 and performing predetermined input operation. In this example, whether or not the agricultural machine 1 is linked with the PTO and whether or not the working device 2 is raised or lowered by the raising/lowering device 8 are fixed to "linked" and "raised/lowered" and are unchangeable. In another example, whether or not the agricultural machine 1 is linked with the PTO may be selectable between "linked" and "not linked" and whether or not the working device 2 is raised or lowered by the raising/lowering device 8 may be selectable between "raised/lowered" and "not raised/lowered".

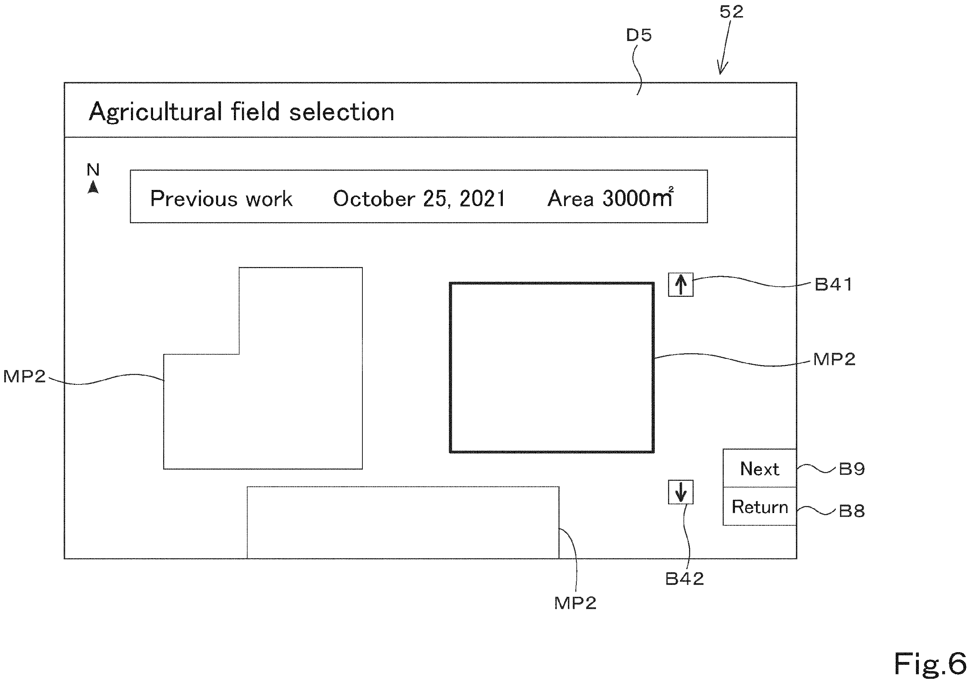

When the user selects the next key B9 on the device confirmation screen D4, the control unit 51 causes setting information displayed on the device confirmation screen D4 to be stored in the internal memory, and causes an agricultural field selection screen D5 illustrated in FIG. 6 to be displayed on the display operating unit 52. On the agricultural field selection screen D5, one or more registered agricultural field maps MP2, an up arrow key B41, a down arrow key B42, a next key B9, and a return key B8 are displayed. In FIG. 6, three agricultural field maps MP2 are displayed. In a case where four or more agricultural field maps MP2 are registered in advance, the control unit 51 causes another agricultural field map MP2 to be displayed on the agricultural field selection screen D5 in response to user's selection of the up arrow key B41 or the down arrow key B42.

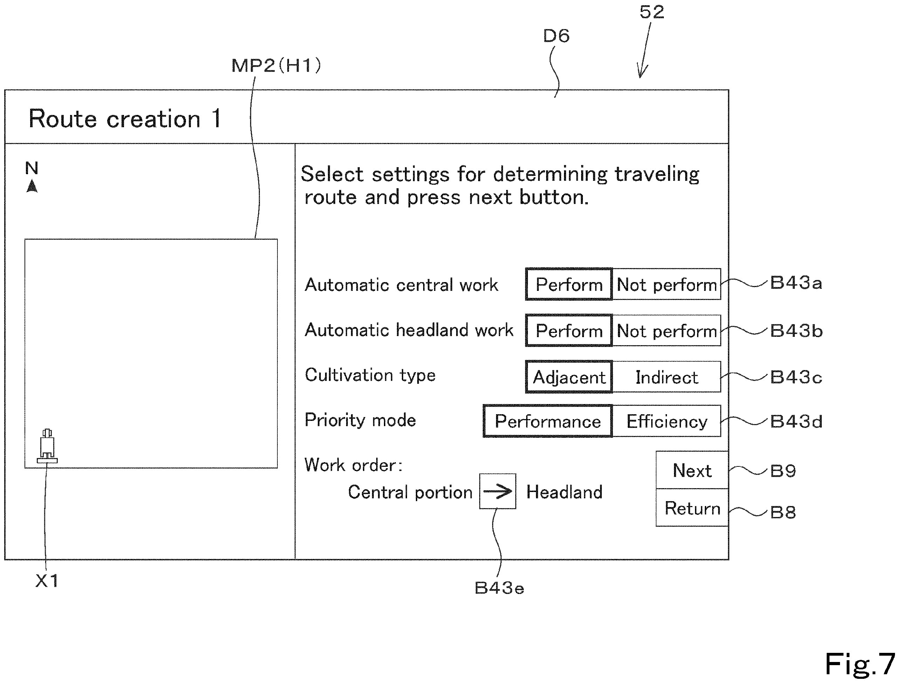

When the user selects any of the agricultural field maps MP2, the control unit 51 causes the selected agricultural field map MP2 to be displayed in a display form different from the other agricultural field maps MP2. In FIG. 6, only the selected agricultural field map MP2 is surrounded by the thick-line frame. Furthermore, the control unit 51 causes date and time of last agricultural work performed in the selected agricultural field map MP2 and an area of the agricultural field map MP2 to be displayed on the agricultural field selection screen D5. When the user selects the next key B9 in a state where any of the agricultural field maps MP2 is being selected, the control unit 51 reads out agricultural field information including the selected agricultural field map MP2 from the storage 53, causes the agricultural field information to be stored in the internal memory, and causes a route creation 1 screen D6 illustrated in FIG. 7 to be displayed on the display operating unit 52.

The agricultural field information includes information concerning the agricultural field map MP2 itself and information concerning an agricultural field corresponding to the agricultural field map MP2. The information concerning the agricultural field map MP2 itself includes identification information, a contour, and an area of the agricultural field map MP2. The information concerning an agricultural field corresponding to the agricultural field map MP2 includes identification information, a position (latitude and longitude), and a contour of the agricultural field. Furthermore, the agricultural field information includes date and time of the last agricultural work.

On the route creation 1 screen D6 illustrated in FIG. 7, the selected agricultural field map MP2 (the contour H1 of the agricultural field), an agricultural machine mark X1, a message indicative of an input operation procedure, setting keys B43a to B43e, a next key B9, and a return key B8 are displayed. The setting keys B43a to B43e are keys for setting work conditions for performing agricultural work on the agricultural field by the agricultural machine 1 (the traveling body 3) and the working device 2. The traveling route of the agricultural machine 1 is created based on the work conditions set by the setting keys B43a to B43e.

Among the setting keys B43a to B43e, an automatic central work key B43a is a key for selecting whether or not to perform agricultural work by the working device 2 while allowing the traveling body 3 of the agricultural machine 1 to automatically travel in a central area set in the agricultural field map MP2 as described later. An automatic headland work key B43b is a key for selecting whether or not to perform agricultural work by the working device 2 while allowing the traveling body 3 of the agricultural machine 1 to automatically travel in a headland set in the agricultural field map MP2 as described later.

The user selects whether or not to perform agricultural work while automatically driving the agricultural machine 1 in each of the central area and the headland area of the agricultural field by tapping a display portion "Perform" or "Not perform" in the automatic central work key B43a and the automatic headland work key B43b. In the example of FIG. 7, the display portion "Perform" of the automatic central work key B43a is tapped, and performing agricultural work by the working device 2 while automatically driving the agricultural machine 1 in the central area of the agricultural field is selected. Furthermore, in the example of FIG. 7, the display portion "Perform" of the automatic headland work key B43b is tapped, and performing agricultural work by the working device 2 while automatically driving the agricultural machine 1 in the headland of the agricultural field is selected.

A work type key B43c is a key for selecting a state of work performed by the working device 2. Since a case where the cultivation work has been selected on the work selection screen D3 of FIG. 4 is illustrated as an example in the present embodiment, the work type key B43c of FIG. 7 is a key for selecting whether a type of the cultivation work is adjacent work or indirect work. In a case where another work is selected on the work selection screen D3 of FIG. 4, the work type key B43c of FIG. 7 is a key for selecting a state of this work.

The adjacent work is a work state in which in a case where cultivation work is performed on a plurality of columns, the work columns are made close without providing an interval therebetween. The indirect work is a work state (thinning-out work) in which in a case where cultivation work is performed on a plurality of columns, a predetermined interval is provided between the work columns. The user selects the adjacent work by tapping a display portion "Adjacent" in the work type key B43c and selects the indirect work by tapping a display portion "Indirect". In the example of FIG. 7, the display portion "Adjacent" in the work type key B43c is tapped, and thereby the adjacent work is selected as a type of the cultivation work.

A priority mode key B43d is a key for selecting a performance priority mode (first priority mode) in which priority is placed on improving performance of agricultural work performed while automatically driving the agricultural machine 1 and the working device 2 in an agricultural field or an efficiency priority mode (second priority mode) in which priority is placed on improving efficiency of the agricultural work. The user selects the performance priority mode by tapping a display portion "Performance" of the priority mode key B43d or selects the efficiency priority mode by tapping a display portion "Efficiency". In the example of FIG. 7, the display portion "Performance" of the priority mode key B43d is tapped, and thereby the performance priority mode (the first priority mode) is selected. The mode selector 5 1d (FIG. 1) selects either the performance priority mode or the efficiency priority mode in accordance with the input operation using the priority mode key B43d.

An area order key B43e is a key for selecting in which of the headland area and the central area the agricultural work is performed earlier by the agricultural machine 1 and the working device 2 and in which of the headland area and the central area the agricultural work is performed later in a case where performing agricultural work on the central area and the headland area is selected by the automatic central work key B43a and the automatic headland work key B43b. "Central portion" corresponding to the central area is displayed on the left side of the area order key B43e, and "Headland" corresponding to the headland area is displayed on the right side of the area order key B43e.

In the example of FIG. 7, a rightward arrow is displayed in the area order key B43e, and therefore performing agricultural work on the central area earlier and performing agricultural work on the headland area later by the agricultural machine 1 and the working device 2 is being selected. When the user taps the area order key B43e in this state, a leftward arrow is displayed in the area order key B43e, and the state switches to a state where performing agricultural work on the headland area earlier and performing agricultural work on the central area later is being selected. Every time the user taps the area order key B43e, a direction of an arrow displayed in the area order key B43e is switched between the leftward arrow and the rightward arrow, and in which of the headland area and the central area agricultural work is performed earlier and in which of the headland area and the central area the agricultural work is performed later are switched. The area order selector 51e (FIG. 1) sets a work order of the headland area and the central area in accordance with the input operation using the area order key B43e.

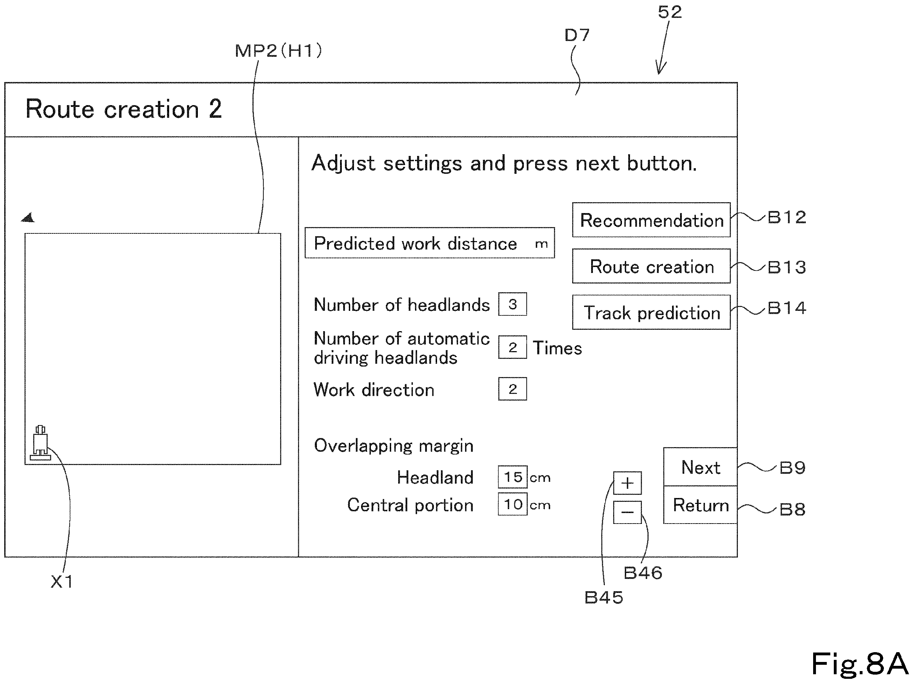

When the user selects the next key B9 on the route creation 1 screen D6, the control unit 51 causes the work conditions displayed on the route creation 1 screen D6 to be stored in an internal memory and causes a route creation 2 screen D7 illustrated in FIG. 8A to be displayed on the display operating unit 52.

On the route creation 2 screen D7, the selected agricultural field map MP2, the agricultural machine mark X1, a message indicative of an input operation procedure, a plurality of setting items and numerical value input fields thereof, a recommendation key B12, a route creation key B13, a track prediction key B14, a positive key B45, a negative key B46, a next key B9, and a return key B8 are displayed. During display of the route creation 2 screen D7, the control unit 51 causes the communicator 54 to acquire an actual position of the traveling body 3 detected by the positioning device 40 and causes the agricultural machine mark X1 to be displayed at a position on the agricultural field map MP2 corresponding to the position of the traveling body 3.

The plurality of setting items on the route creation 2 screen D7 are creation conditions for creating a traveling route and work conditions for performing agricultural work on an agricultural field by the agricultural machine 1 and the working device 2. The setting items include a predicted work distance, the number of headlands, the number of automatic driving headlands, a work direction, a headland overlapping margin, and a central portion overlapping margin. A numerical value can be input for these items other than the predicted work distance. The number of headlands is the number of headlands set one or more rounds along the contour H1 (the agricultural field map MP2) of the registered agricultural field inside the contour H1. The number of automatic driving headlands is the number of headlands where agricultural work is performed by the working device 2 while automatically driving the agricultural machine 1 among the set headlands.

The work direction is a direction in which work is performed by the working device 2 while allowing the traveling body 3 to travel straight back and forth in the central portion inside the headland of the agricultural field. By inputting a predetermined numerical value (e.g., "1" to "4") in the numerical value input column of the work direction, upward, downward, leftward, and rightward directions of the route creation 2 screen D7 corresponding to the numerical value are set. The headland overlapping margin is a margin by which the work width of the working device 2 sticks out to the headland. The central portion overlapping margin is an overlapping margin between work widths in a case where work is performed by the working device 2 while allowing the traveling body 3 to travel straight back and forth in the central portion of the agricultural field.

By selecting a numerical value input column of a setting item and operating the positive key B45 or the negative key B46 on the route creation 2 screen D7, the user can input a numerical value in the numerical value input column. When the user selects the recommendation key B12, the control unit 51 reads out a recommended value of each setting item according to the agricultural work selected on the work selection screen D3 (FIG. 4) among recommended values stored in advance in the storage 53 and inputs (displays) the recommended value in a corresponding numerical value input column.

When the user selects the route creation key B13 after inputting a numerical value in each setting item of the route creation 2 screen D7, the control unit 51 causes the numerical value of each setting item to be stored in the internal memory. Then, the area setter 51b (FIG. 1) sets a central area (second area) C1 and a headland area (first area) E1 in the agricultural field map MP2, and the route creator 51c (FIG. 1) creates a traveling route (scheduled traveling route) L1 on the agricultural field map MP2. The setting of the areas and creation of the traveling route will be described later in detail.

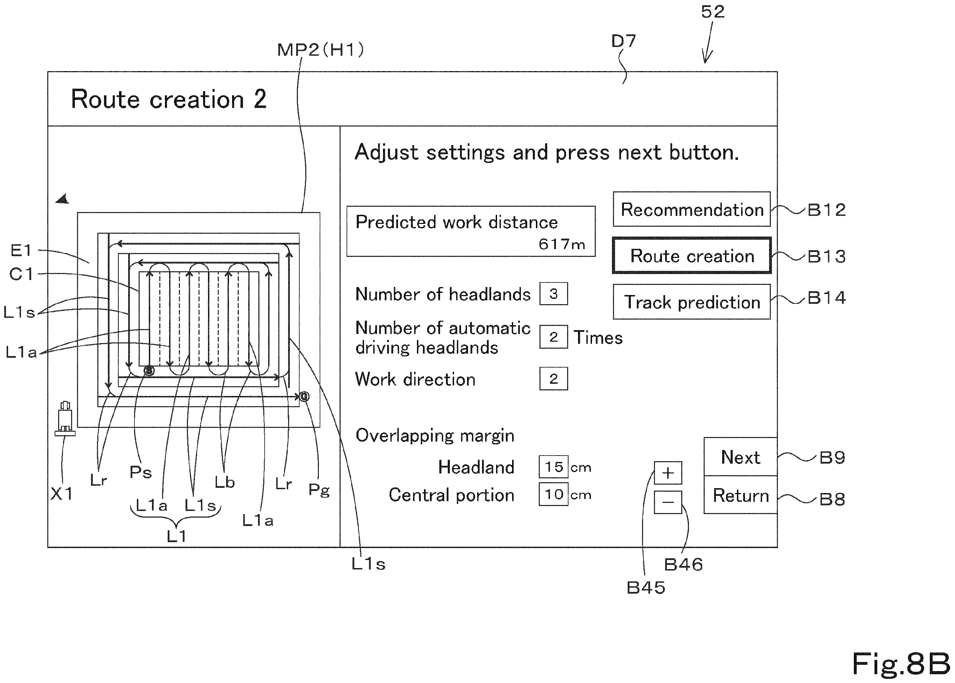

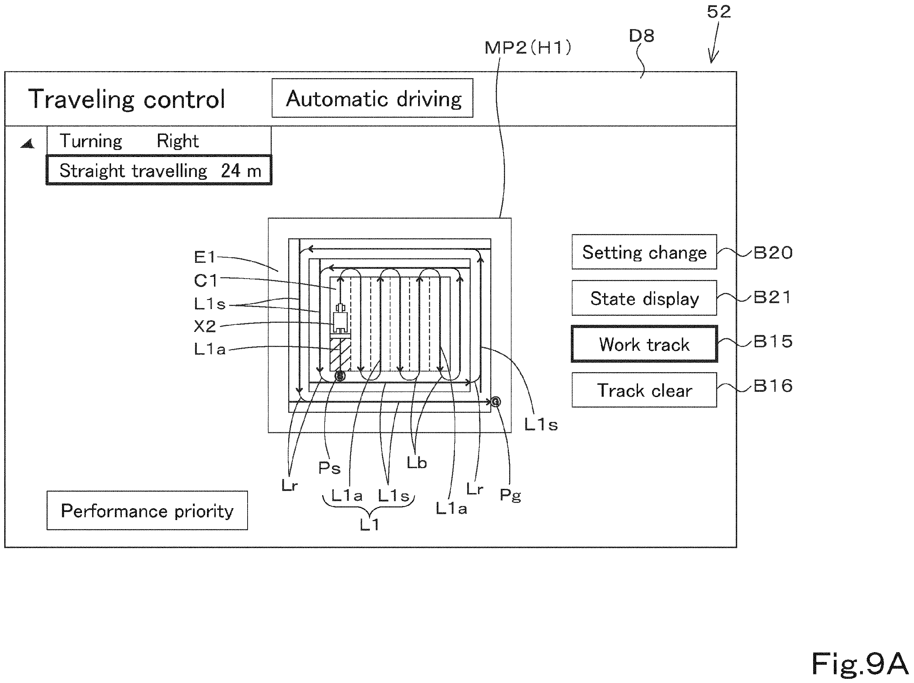

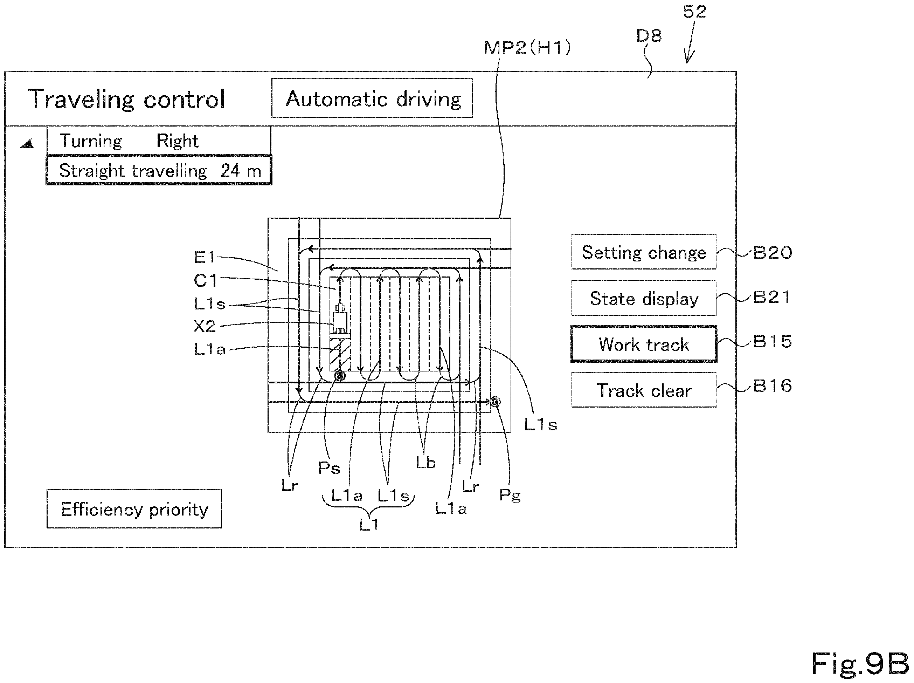

FIG. 8B illustrates the traveling route L1 and others in a case where the performance priority mode is selected. When the user selects the next key B9 after the traveling route L1 and others are displayed on the route creation 2 screen D7, the control unit 51 causes a traveling control screen D8 illustrated in FIG. 9A or FIG. 9B to be displayed on the display operating unit 52. FIG. 9A illustrates an example of the traveling control screen D8 displayed in a case where the performance priority mode is selected. FIG. 9B illustrates an example of the traveling control screen D8 displayed in a case where the efficiency priority mode is selected.

When the user selects the next key B9 after the traveling route L1 and others are displayed on the route creation 2 screen D7 of FIG. 8B, the control unit 51 generates automatic traveling data based on the setting information stored in the internal memory and causes the communicator 54 to transmit (output) the automatic traveling data to the controller 60 of the agricultural machine 1. The automatic traveling data includes information on the agricultural field map MP2, information on the areas C1 and E1 and the traveling route L1, a kind of agricultural work, and a result of selection of a priority mode (the performance priority mode or the efficiency priority mode). The device-specific information of the agricultural machine 1 and the working device 2 may be included in the automatic traveling data transmitted from the agricultural work assistance device 50 to the controller 60 or may be stored in advance in a storage (e.g., a memory) included in the controller 60.

On the traveling control screen D8 illustrated in FIG. 9A or FIG. 9B, the traveling state of the agricultural machine 1 and the work state of the working device 2 some time after start of automatic driving of the agricultural machine 1 are displayed. On the traveling control screen D8, the agricultural field map MP2, the traveling route L1, a start position Ps of the traveling route L1, a goal position Pg of the traveling route L1, the agricultural machine mark X2, the traveling state of the agricultural machine 1, a priority mode ("Performance priority" or "Efficiency priority"), a setting change key B20, a state display key B21, a work track key B15, and a track clear key B16 are displayed.

The control unit 51 causes the communicator 54 to acquire an actual position of the traveling body 3 detected by the positioning device 40 on a predetermined cycle, and causes the agricultural machine mark X2 to be displayed as needed at a position corresponding to the position of the traveling body 3 on the agricultural field map MP2. That is, the agricultural machine mark X2 on the traveling control screen D8 indicates the actual position of the traveling body 3 of the agricultural machine 1.

For example, the user manually drives the agricultural machine 1 to the start position Ps while viewing the traveling control screen D8 and then performs predetermined operation for shifting to an automatic traveling work mode by the mode switch 65 (FIG. 1). As a result, the automatic controller 61 (FIG. 1) shifts to the automatic traveling work mode and causes the working device 2 to perform agricultural work (ground work) while allowing the traveling body 3 to automatically travel based on the automatic traveling data received from the agricultural work assistance device 50 and the position of the traveling body 3 detected by the positioning device 40.

Specifically, the automatic controller 61 first reads the route information included in the automatic traveling data and grasps the areas C1 and E1, the traveling route L1, the start position Ps, and the goal position Pg. The traveling route L1 includes a plurality of linear work lines L1a and L1s.

For example, in a case where performing agricultural work on the central area C1 earlier and performing the agricultural work on the headland area E1 later is selected by the area order key B43e (FIG. 7) and the area order selector 51e (FIG. 1), the automatic controller 61 causes the working device 2 to perform ground work while allowing the traveling body 3 to automatically travel from the start position Ps based on the work line L1a in the central area C1.

When the traveling body 3 (the agricultural machine 1) reaches a terminal end of one work line L1a, the automatic controller 61 stops the ground work using the working device 2 once, raises the working device 2, and causes the traveling body 3 to turn toward a start end of adjacent another work line L1a. In this process, the automatic controller 61 causes the agricultural machine 1 and the working device 2 to turn based on the position information of the areas C1 and E1, position information of the work lines L1a, dimension information of the agricultural machine 1 and the working device 2, a position of the traveling body 3 detected by the positioning device 40, a detection result of the detector 64, a result of selection of the mode selector 51d (the priority mode key B43d), and the like.

Then, when the traveling body 3 reaches the start end of the other straight traveling route L1a, the automatic controller 61 lowers the working device 2, and resumes the ground work using the working device 2 when the traveling body 3 starts to automatically travel based on the other work line L1a. In this way, the traveling body 3 automatically travels straight back and forth in the central area C1, and ground work is performed on the central area C1 by the working device 2.

Then, the automatic controller 61 causes the working device 2 to perform ground work while allowing the traveling body 3 to automatically travel based on the work line L1s created in the headland area E1 and the position of the traveling body 3. In this process, the automatic controller 61 causes the working device 2 to perform ground work while allowing the traveling body 3 to automatically travel based on the work line L1s, and stops the ground work using the working device 2 by raising the working device 2 while the traveling body 3 is turning. In this turning, the automatic controller 61 causes the agricultural machine 1 and the working device 2 to turn based on the position information of the areas C1 and E1, the position information of the work line L1s, the dimension information of the agricultural machine 1 and the working device 2, the position of the traveling body 3 detected by the positioning device 40, a detection result of the detector 64, and the like. In this way, the traveling body 3 automatically circles outside the central area C1, and the working device 2 performs ground work on a headland E2a (FIG. 9B) that surrounds the central area C 1.

During automatic driving of the agricultural machine 1, the automatic controller 61 automatically steers the traveling body 3 while automatically changing a traveling speed of the traveling body 3 based on the traveling route L1 and a position of the traveling body 3 (the agricultural machine 1). Furthermore, the automatic controller 61 automatically executes and stops the agricultural work (ground work) performed by the working device 2. Furthermore, the automatic controller 61 controls a position of the working device 2 in a height direction by the raising/lowering device 8. Furthermore, the automatic controller 61 sometimes cancels the traveling of the traveling body 3 and the agricultural work of the working device 2 in accordance with a detection result of the detector 64 or the like.

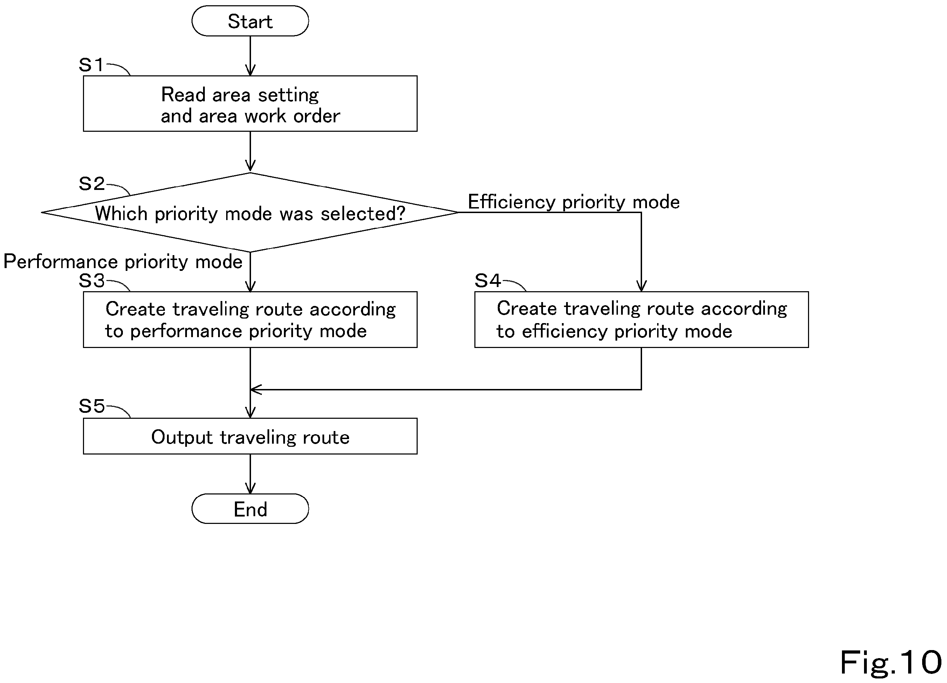

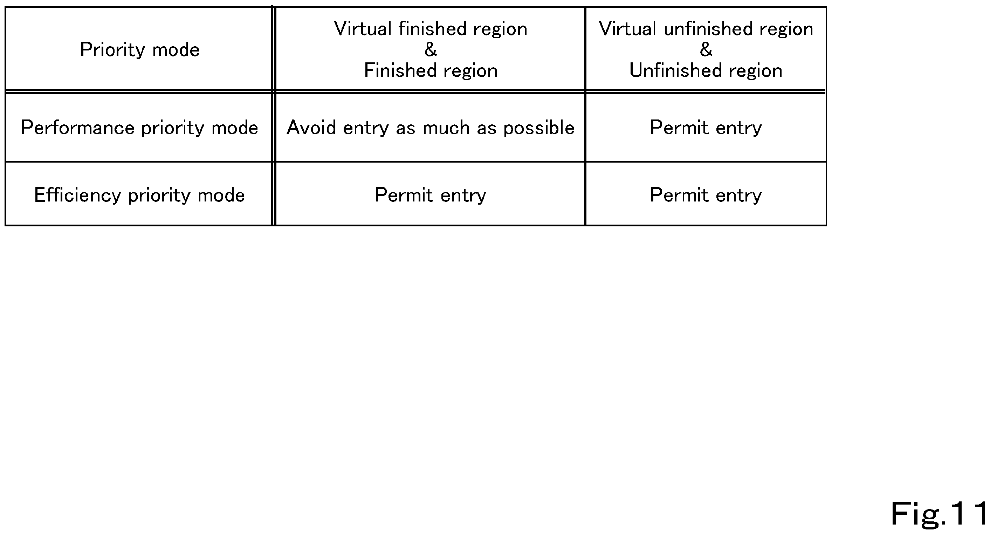

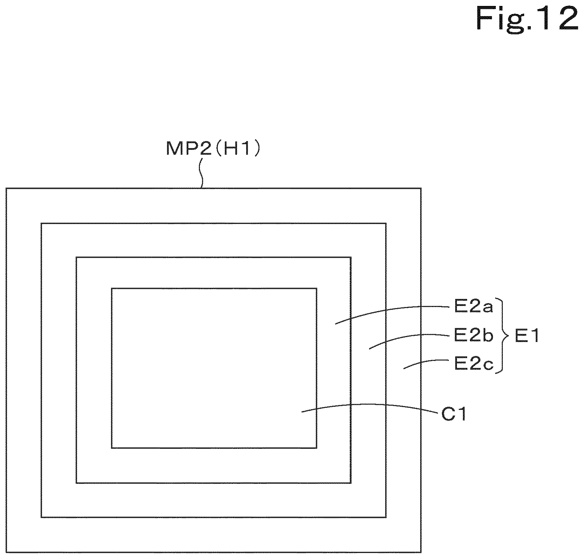

Next, setting of the areas C1 and E1 and creation of the traveling route L1 are described in detail. FIG. 10 is a flowchart illustrating a procedure of creating the traveling route L1. FIG. 11 illustrates a correspondence relationship between a priority mode (the performance priority mode, the efficiency priority mode) and a state of entry of the agricultural machine 1 into a region of an (agricultural field) such as the agricultural field map MP2. Data of the table illustrated in FIG. 11 is stored in advance in the storage 53. FIG. 12 illustrates an example of the central area C1 and the headland area E1 in the agricultural field map MP2.

As described above, when the user selects the route creation key B13 after inputting numerical values in the setting items on the route creation 2 screen D7 of FIG. 8A, the area setter 51b (FIG. 1) sets the central area C1 and the headland area E1 on the agricultural field map MP2 as illustrated in FIG. 12 based on the agricultural field information, the work width of the working device 2, the number of headlands, the headland overlapping margin, and the like input on the route creation 2 screen D7. Specifically, for example, the area setter 51b calculates contours formed by offsetting the contour H1 of the agricultural field inward as many times as the number of headlands by a width obtained by subtracting a headland overlapping margin from the work width of the working device 2 (or the entire width of the working device 2). Then, the area setter 51b sets, as the central area C 1, an area (central portion) surrounded by the innermost contour among the contours.

Furthermore, the area setter 51b sets, as the headland area E1, a frame-shaped area (outer frame portion) outside the central area C1 and inside the contour H1 of the agricultural field. Furthermore, the area setter 51b sets, as headlands E2a, E2b, and E2c, areas between adjacent contours in the headland area E1 among the contour H1 of the agricultural field and the contours formed by offsetting the contour H1. Then, the area setter 51b causes data such as positions of the areas C1 and E1 (including the headlands E2a, E2b, and E2c) to be stored in the storage 53.

The route creator 51c reads, from the storage 53, the central area C1 and the headland area E1 set by the area setter 51b and a work order of the central area C1 and the headland area E1 selected by the area order selector 51e (S 1 in FIG. 10). Furthermore, the route creator 51c checks the priority mode selected by the area order selector 51e (S2). Then, in a case where the performance priority mode is being selected, the route creator 51c creates the traveling route L1 on the agricultural field map MP2 in accordance with the performance priority mode (S3). In a case where the efficiency priority mode is being selected, the route creator 51c creates the traveling route L 1 on the agricultural field map MP2 in accordance with the efficiency priority mode (S4). In these processes, the route creator 51c creates the traveling route L1 based on the agricultural field information, the areas C1 and E1, the dimension information of the agricultural machine 1 and the working device 2, setting contents (work conditions) set on the route creation 1 screen D6 and the route creation 2 screen D7, and the like.

Then, the route creator 51c outputs the created traveling route L1 (S5). In this way, the traveling route L1 is displayed on the route creation 2 screen D7 by the control unit 51 and the display operating unit 52, as illustrated in FIG. 8B. The traveling route L1 is included in the automatic traveling data by the control unit 51 and is transmitted to the controller 60 by the communicator 54.

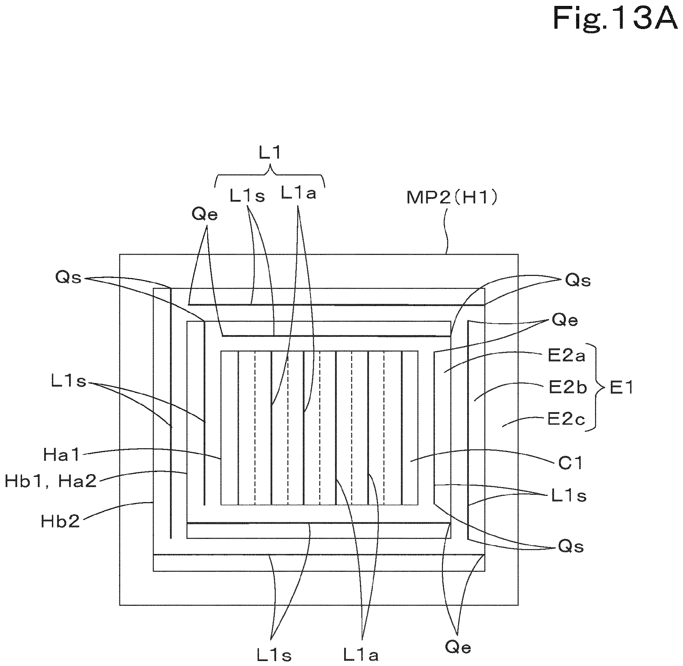

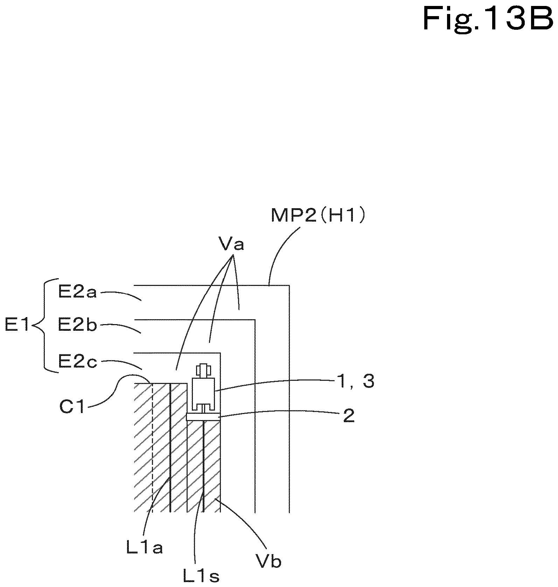

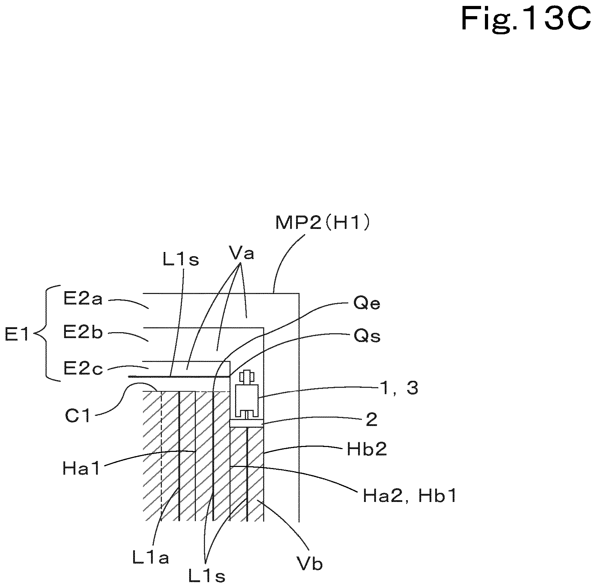

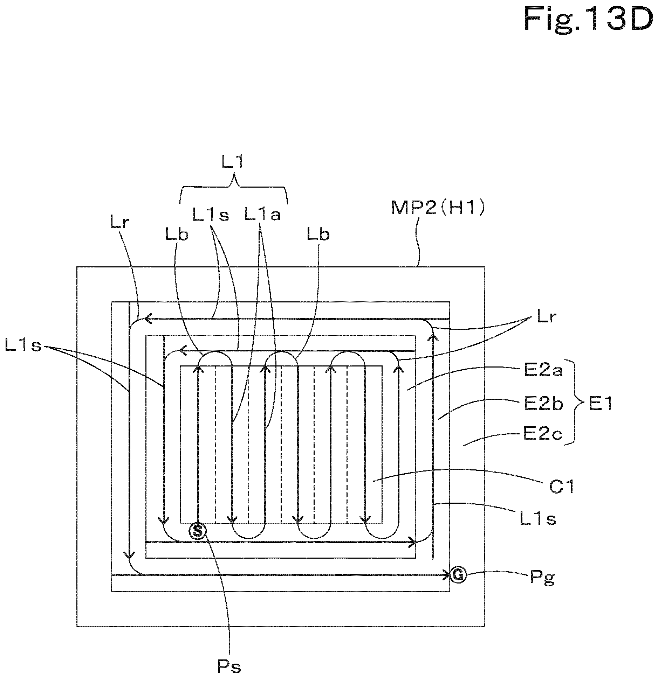

FIGS. 13A to 13D illustrate an example of the traveling route L1 created in a case where the performance priority mode is selected. FIGS. 13A and 13D illustrate the whole traveling route L1, and FIGS. 13B and 13C illustrate a portion of the traveling route L1 in an enlarged manner.

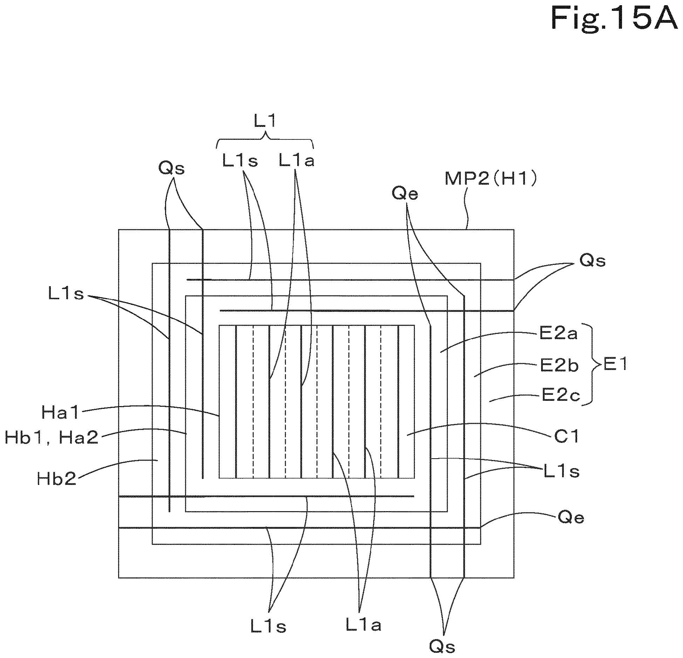

FIGS. 13A to 13D illustrate the traveling route L1 created in a case where cultivation work is selected as agricultural work on the work selection screen D3 (FIG. 4), performing the agricultural work on the central area C1 and the headland area E1 while automatically driving the agricultural machine 1 is selected by the automatic central work key B43a and the automatic headland work key B43b and performing the agricultural work on the central area C1 earlier and performing the agricultural work on the headland area E1 later is selected by the area order key B43e on the route creation 1 screen D6 (FIG. 7), the number of headlands is set to three and the number of automatic driving headlands is set to two on the route creation 2 screen D7 (FIG. 8A), and performing the agricultural work on the headlands E2a and E2b of the headland area E1 while automatically driving the agricultural machine 1 is input (similar work conditions are used in FIGS. 15A to 15D, which will be described later).

In the processing of creating a traveling route in accordance with the performance priority mode in S3 of FIG. 10, the route creator 51c first creates a plurality of unit work sections within the central area C1 by dividing (the broken lines) the central area C1 by a width obtained by subtracting a central portion overlapping margin from the work width of the working device 2 starting from one end portion (right end portion in FIG. 13A and other drawings) of the central area C1 parallel to a work direction (the up-down direction in the example of FIG. 13A and other drawings). Then, the route creator 51c creates a straight traveling route L1a on a central line of each unit work section in a width direction (the left-right direction in FIG. 13A).

Next, the route creator 51c creates a linear work line L1s on central lines of inner two headlands E2a and E2b in a width direction. In this process, the route creator 51c simulates a state where the agricultural machine 1 has virtually performed agricultural work by the working device 2 while traveling based on the work lines L1a and L1s that have been already created. Then, in this virtual work state, the route creator 51c divides the agricultural field map MP2 into a virtual unfinished region Va (non-hatched portion) where the agricultural work has not been performed yet and a virtual finished region Vb (hatched portion) where the agricultural work has been already performed, as illustrated in FIGS. 13B and 13C.

As illustrated in FIG. 11, in the performance priority mode, avoiding entry of the agricultural machine 1 into the virtual finished region Vb as much as possible (substantially) and permitting entry of the agricultural machine 1 into the virtual unfinished region Va is set. Furthermore, in the performance priority mode, avoiding entry of the agricultural machine 1 into a finished region where the agricultural work has been already performed as much as possible and permitting entry of the agricultural machine 1 into an unfinished region where the agricultural work has not been performed yet during automatic driving of the agricultural machine 1 is set.

Note that, in this example, "avoiding entry of the agricultural machine 1 into the region as much as possible (substantially)" means that entry of the agricultural machine 1 into the region is basically avoided but entry of the agricultural machine 1 into the region need not be avoided in a situation where the agricultural machine 1 has no choice but to enter the region or in emergency situations such as occurrence of an abnormality in the agricultural machine 1 or the working device 2. Alternatively, for example, an amount (a distance or an area) of entry of the agricultural machine 1 into the region may be kept less than a predetermined value. In another example, in the performance priority mode, entry of the agricultural machine 1 into the virtual finished region and the finished region may be "prohibited".

To perform cultivation work (one kind of ground work) in the performance priority mode based on the setting contents of FIG. 11, the route creator 51c, for example, sequentially creates the work line L1s in the headlands E2a and E2b and adjusts a start position Qs or an end position Qe of each work line L1s so that the agricultural machine 1 preferentially enters the virtual unfinished region Va while avoiding entry into the virtual finished region Vb as much as possible. More specifically, the route creator 51c sequentially creates the work line L1s so that one work line L1s (one portion of the traveling route L 1) and another work line L1s (another portion of the traveling route L1) are prevented as much as possible from partially overlapping each other or from becoming close to each other by less than a predetermined interval, as illustrated in FIG. 13A. The predetermined interval is, for example, set less than a value obtained by subtracting the headland overlapping margin set on the route creation 2 screen D7 of FIG. 8A from a half of the work width of the working device 2.

Furthermore, the route creator 51c sets the start position Qs and the end position Qe of each work line L1s at corner portions of the headland E2a or E2b where the work line L1s is present, as illustrated in FIG. 13A. More specifically, the start position Qs or the end position Qe of each work line L1s is set at a position aligned, in the width direction of the headland E2a or E2b, with a corner portion of an inner contour Ha1 or Hb1 of the headland E2a or E2b where the work line L1s is present or on an outer contour Ha2 or Hb2 of the headland E2a or E2b where the work line L1s is present.

As illustrated in FIG. 13A, after creating the plurality of work lines L1a and L1s in the central area C1 and the headland area E1, the route creator 51c determines an order in which the agricultural machine 1 travels along the plurality of work lines L1a and L1s, that is, an order of the work lines L1a and L1s based on which the automatic controller 61 causes the agricultural machine 1 to automatically travel. Also in this case, the route creator 51c determines an order of the plurality of work lines L1a and L1s so that the agricultural machine 1 preferentially enters the virtual unfinished region Va while avoiding entry into the virtual finished region Vb as much as possible. When the order of the plurality of work lines L1a and L1s is determined, the traveling route L1 including the plurality of work lines L1a and L1s is created on the agricultural field map MP2.

In a case where the traveling route L1 is displayed on the display screen of the display operating unit 52 together with the agricultural field map MP2, the route creator 51c connects the work lines L1a and L1s by arc-shaped auxiliary lines Lb and Lr in the determined order as illustrated in FIGS. 13D, 8B, and 9A to indicate the order of the work lines L1a and L1s along which the agricultural machine 1 travels, and the work lines L1a and L1s and the auxiliary lines Lb and Lr are indicated by arrows to indicate a traveling direction of the agricultural machine 1. This makes the traveling route L1 continuous. Furthermore, the route creator 51c sets the start position Ps and the goal position Pg of the traveling route L1 on the agricultural field map MP2.

Note that the auxiliary lines Lb and Lr are illustrated as arc shapes for convenience, for example, for easy display on the display screen of the display operating unit 52 and easy viewing of the traveling route L1 on the display screen. In a case where the agricultural machine 1 (the traveling body 3) actually travels automatically based on the traveling route L1, the agricultural machine 1 travels based on one work line L1a or L1s and then turns toward another work line L1a or L1s at a position corresponding to the auxiliary line Lb or Lr. In this turning, the agricultural machine 1 draw a complicated traveling track by not only traveling forward, but also traveling backward or turning plural times. That is, the auxiliary lines Lb and Lr are for indicating an order in which the agricultural machine 1 travels along the work lines L1a and L1s on the display operating unit 52 and do not indicate a route along which the agricultural machine 1 actually turns. In another example, the work lines L1a and L1s may be connected by auxiliary lines Lb and Lr having a shape other than the arc shape.

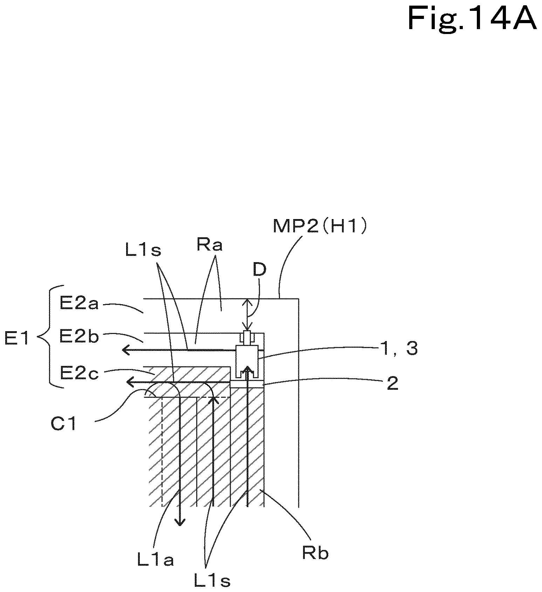

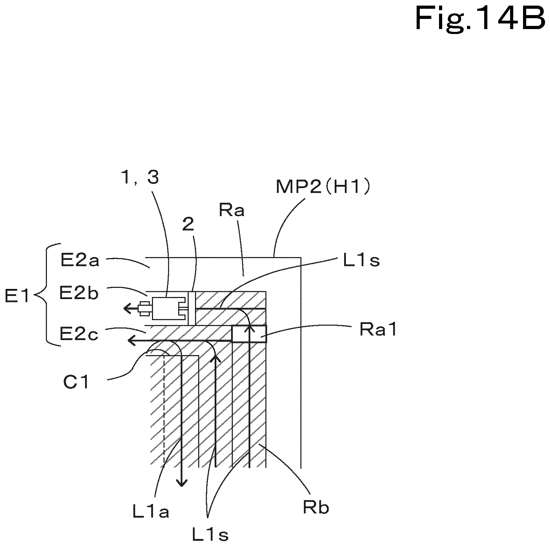

As illustrated, for example, in FIG. 13D, after the traveling route L1 is created in accordance with the performance priority mode, the automatic controller 61 performs automatic driving of the agricultural machine 1 based on the traveling route L1, the position of the traveling body 3, the performance priority mode, and the like so that the agricultural machine 1 preferentially enters an unfinished region Ra (FIGS. 14A and 14B) where cultivation work has not been performed yet while avoiding entry into a finished region Rb (FIGS. 14A and 14B) where the cultivation work has been already performed as much as possible in the agricultural field. As a result, the finished region is not trampled under the wheel of the agricultural machine 1 and the like, and performance (visual quality, finish quality) of the cultivation work improves.

FIGS. 14A and 14B illustrate an example of a work state during automatic driving of the agricultural machine 1 in a case where the performance priority mode is selected. The automatic controller 61 controls traveling and turning of the agricultural machine 1 by referring to a detection result of the object detector 64a (FIG. 1) during automatic driving of the agricultural machine 1. For example, the automatic controller 61 may detect that a distance D to a ridge of the agricultural field ahead of the agricultural machine 1 has become less than a predetermined value by the object detector 64a while the agricultural machine 1 is traveling on the work line L1s in a situation where the agricultural machine 1 performs agricultural work (cultivation work) by the working device 2 while automatically traveling in the headland E2b based on the work line L1s and the position of the agricultural machine 1 (the traveling body 3), as illustrated in FIG. 14A.

In this case, the automatic controller 61 stops traveling of the agricultural machine 1 and agricultural work of the working device 2 in the middle of the work line L1s so that the agricultural machine 1 does not go beyond the agricultural field. Then, the automatic controller 61 raises the working device 2 to a non-work position by the raising/lowering device 8 and then moves the agricultural machine 1 to a start position of a next work line L1s by turning the agricultural machine 1 plural times in the unfinished region Ra (non-hatched portion) where the agricultural work has not been performed yet so that the agricultural machine 1 does not go beyond the agricultural field and the agricultural machine 1 avoids entry into the finished region Rb (hatched portion) where the agricultural work has been already performed as much as possible. Then, the automatic controller 61 lowers the working device 2 to a work position by the raising/lowering device 8, and then resumes the traveling of the agricultural machine 1 and the agricultural work of the working device 2 based on the next work line L1s and the position of the agricultural machine 1.

As a result of the above operation of the agricultural machine 1, an unnecessary unfinished region Ra1 remains in the agricultural field, as illustrated in FIG. 14B. The unnecessary unfinished region Ra1 is an unintended unfinished region that occurs in a portion of the agricultural field other than the outermost headland E2c where performing the agricultural work during automatic driving of the agricultural machine 1 is not set on the route creation 2 screen D7 (FIG. 8A). As for the unnecessary unfinished region Ra1 remaining in the agricultural field, for example, the agricultural work is performed by the working device 2 by manually driving the agricultural machine 1 after end of the automatic driving of the agricultural machine 1 based on the traveling route L1 or predetermined auxiliary cultivation work is performed by the agricultural machine 1 and the working device 2 during the automatic driving of the agricultural machine 1 based on the traveling route L1. However, this is not efficient since it takes an extra time to perform such work and fuel or electric power is consumed to drive the agricultural machine 1 and others.

Furthermore, to prevent the agricultural machine 1 from going beyond the agricultural field or entering the finished region Rb during turning of the agricultural machine 1 based on automatic driving in the headland E2b, complicated turning action of the agricultural machine 1 is needed, which increases the number of turns, a lot of work time is needed accordingly, and fuel or electric power is consumed to drive the agricultural machine 1 and others. This is not efficient. As a countermeasure, the efficiency priority mode is prepared.

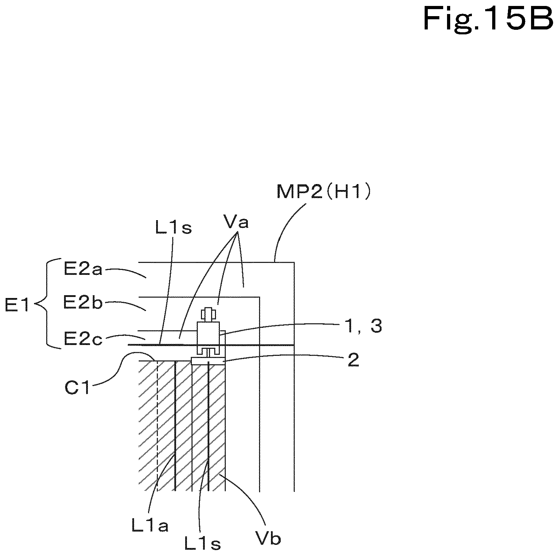

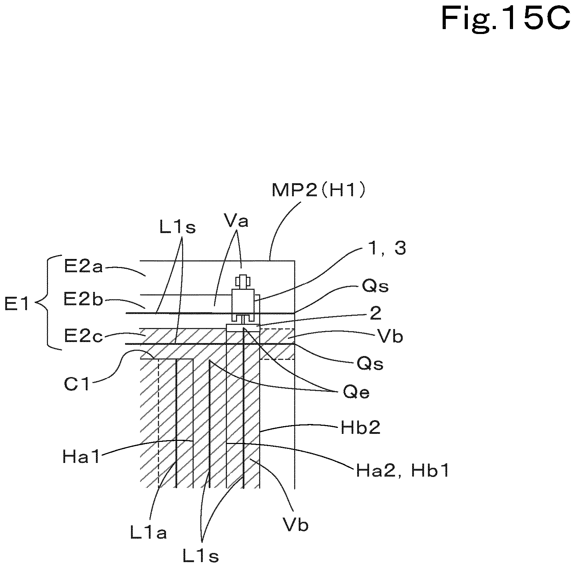

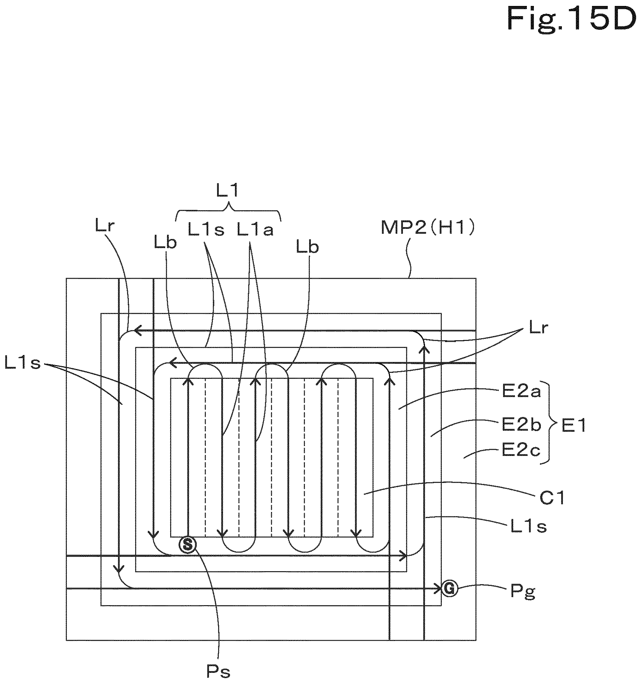

FIGS. 15A to 15D illustrate an example of the traveling route L1 created in a case where the efficiency priority mode is selected. FIGS. 15A and 15D illustrate the whole traveling route L1, and FIGS. 15B and 15C illustrate a portion of the traveling route L1 in an enlarged manner.

In the processing of creating a traveling route in accordance with the efficiency priority mode in S4 of FIG. 10, the route creator 51c first creates a plurality of unit work sections within the central area C1 as described earlier and then creates a linear work line L1a on a central line of each unit work section in a width direction, as illustrated in FIG. 15A. Next, the route creator 51c creates a linear work line L1s on central lines of the headlands E2a and E2b in a width direction.

As illustrated in FIG. 11, in the efficiency priority mode, permission of entry of the agricultural machine 1 into the virtual finished region Vb and the virtual unfinished region Va is set. Furthermore, in the efficiency priority mode, permission of entry of the agricultural machine 1 into the finished region and the unfinished region during automatic driving of the agricultural machine 1 is set. Therefore, in the virtual work state described above, the route creator 51c sequentially creates the work lines L I s in the headlands E2a and E2b and adjusts the start position Qs or the end position Qe of each work line L1s so that entry of the agricultural machine 1 into the virtual finished region Vb and the virtual unfinished region Va is permitted in order to perform cultivation work by the working device 2 in the efficiency priority mode.

Specifically, the route creator 51c sequentially creates the work lines L1s while permitting one work line L1s and another work line L1s to partially overlap each other or becoming close to each other by less than a predetermined interval, as illustrated in FIG. 15A. Furthermore, the route creator 51c sets the start position Qs of the work line L1s between the contour H1 of the agricultural field in the agricultural field map MP2 and an outermost contour Hb2 of the headland E2b or E2a where the agricultural work is performed in the headland area E1 as illustrated in FIGS. 15A and 15C so that no unnecessary unfinished region (e.g., the unnecessary unfinished region Ra1 of FIG. 14B) occurs between one work line L1s and another work line L1s. In this example, the route creator 51c sets the start position Qs of the work line L1s on the contour H1 of the agricultural field. Furthermore, the route creator 51c sets the end position Qe of each work line L1s at a position aligned, in the width direction of the headland E2a or E2b, with a corner portion of the inner contour Ha1 or Hb1 of the headland E2a or E2b where the work line L1s is present or on the outer contour Ha2 or Hb2 of the headland E2a or E2b where the work line L1s is present.

As a result, the work line L1s created in the outer headland E2b partially overlaps (crosses) the work line L1s created in the inner headland E2a. Accordingly, in a case where the agricultural machine 1 travels based on the work line L1s created in the outer headland E2b in a virtual work state where the agricultural machine 1 has virtually performed agricultural work by the working device 2 while traveling based on the work line L1s in the inner headland E2a that has been already created, the agricultural machine 1 enters the virtual finished region Vb of the inner headland E2a, and the virtual finished region Vb of the inner headland E2a and the virtual finished region Vb of the outer headland E2b partially overlap.

As illustrated in FIG. 15A, after creating the plurality of work lines L1a and L1s in the central area C1 and the headland area E1, the route creator 51c determines an order in which the agricultural machine 1 travels along the plurality of work lines L1a and L1s, that is, an order of the work lines L1a and L1s based on which the automatic controller 61 causes the agricultural machine 1 to automatically travel. Also in this case, the route creator 51c determines an order of the plurality of work lines L1a and L1s so that entry of the agricultural machine 1 into the virtual finished region Vb and the virtual unfinished region Va is permitted. For example, the route creator 51c may determine an order of the plurality of work lines L1a and L1s so that a traveling time or a traveling distance of the agricultural machine 1 is made as short as possible in consideration of the start positions Qs, the end positions Qe, and directions (angles) of the plurality of work lines L1a and L1s. When the order of the plurality of work lines L1a and L1s is determined, the traveling route L1 including the plurality of work lines L1a and L1s is created on the agricultural field map MP2.

In a case where the traveling route L1 is displayed on the display screen of the display operating unit 52 together with the agricultural field map MP2, the route creator 51c connects the work lines L1a and L1s by arc-shaped auxiliary lines Lb and Lr in the determined order as illustrated in FIGS. 15D and 9B to indicate the order of the work lines L1a and L1s, and the work lines L1a and L1s and the auxiliary lines Lb and Lr are indicated by arrows to indicate a traveling direction of the agricultural machine 1. This makes the traveling route L1 continuous. Furthermore, the route creator 51c sets the start position Ps and the goal position Pg of the traveling route L1 on the agricultural field map MP2.

As illustrated, for example, in FIG. 15D, after the traveling route L1 is created in accordance with the efficiency priority mode, the automatic controller 61 performs automatic driving of the agricultural machine 1 based on the traveling route L1, the position of the traveling body 3, the performance priority mode, and the like so that entry of the agricultural machine 1 into the finished region Rb where cultivation work has been already performed and the unfinished region Ra where the cultivation work has not been performed yet is permitted in the agricultural field. That is, the automatic controller 61 causes the agricultural machine 1 to travel along the traveling route L1 irrespective of the finished region Rb and the unfinished region Ra and turns the agricultural machine 1 so that the agricultural machine 1 does not go beyond the agricultural field. Since the agricultural machine 1 enters not only the unfinished region Ra, but also the finished region Rb, turning action of the agricultural machine 1 becomes simple, which decreases the number of turns, a work time is shortened accordingly, and an amount of consumed fuel or electric power for driving the agricultural machine 1 and others is reduced. This improves efficiency of the agricultural work in the agricultural field.

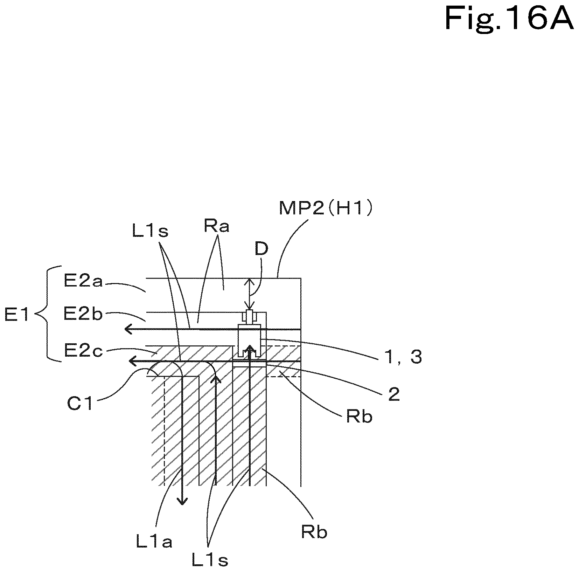

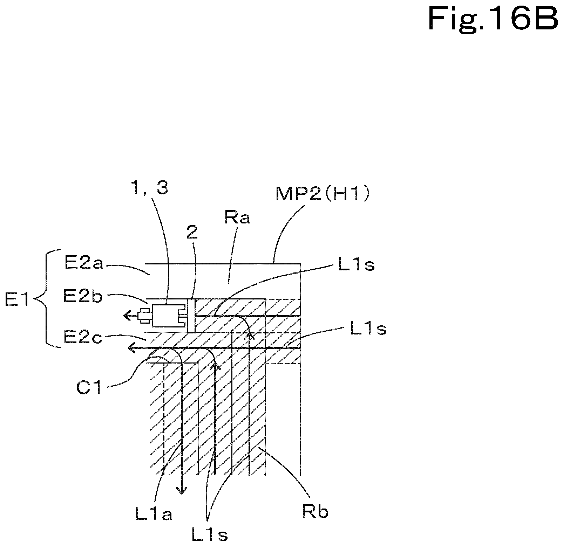

FIGS. 16A and 16B illustrate an example of a work state during automatic driving of the agricultural machine 1 in a case where the efficiency priority mode is selected. For example, the automatic controller 61 sometimes detects that the distance D from the agricultural machine 1 to a ridge of the agricultural field becomes less than a predetermined value by the object detector 64a while the agricultural machine 1 is traveling on the work line L1s as illustrated in FIG. 16A in a situation where the agricultural machine 1 is performing agricultural work (cultivation work) by the working device 2 while automatically traveling in the headland E2b based on the work line L1s and the position of the agricultural machine 1. In this case, the automatic controller 61 stops the traveling of the agricultural machine 1 and the agricultural work of the working device 2 in the middle of the work line L1s, raises the working device 2 to a non-work position by the raising/lowering device 8, and moves the agricultural machine 1 to a start position of a next work line L1s by turning the agricultural machine 1 plural times. Then, the automatic controller 61 lowers the working device 2 to a work position by the raising/lowering device 8 and then resumes the traveling of the agricultural machine 1 and the agricultural work of the working device 2 based on the next work line L1s and the position of the agricultural machine 1, as illustrated in FIG. 16B.

Even when the agricultural machine 1 operates as described above, the unnecessary unfinished region Ra1 such as the one illustrated in FIG. 14B does not remain in the agricultural field since the agricultural work has been already performed by the working device 2 in a region from the headland E2a to a ridge constituting the contour of the agricultural field based on the work line L1s created in the headland E2a located inside the headland E2b. Accordingly, the agricultural work need not be performed on the unnecessary unfinished region Ra1 by the working device 2 by manually driving the agricultural machine 1 after end of automatic driving of the agricultural machine 1 based on the traveling route L1, and therefore an extra work time is not needed, fuel or electric power for driving the agricultural machine 1 and others is not consumed, and efficiency of the agricultural work improves.

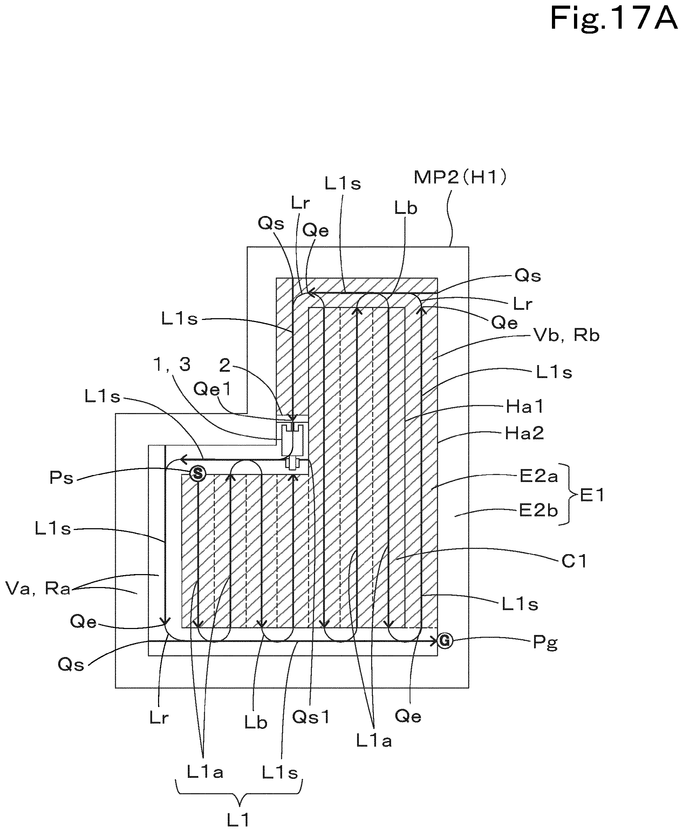

Although an example in which the traveling route L1 is created on the agricultural field map MP2 indicating a rectangular agricultural field and the agricultural machine 1 performs agricultural work by the working device 2 while automatically traveling based on the traveling route L1 and the like in the agricultural field has been illustrated in the above embodiment, this is not restrictive. For example, as illustrated in FIGS. 17A to 18B, the agricultural field may have a shape other than a rectangular shape.

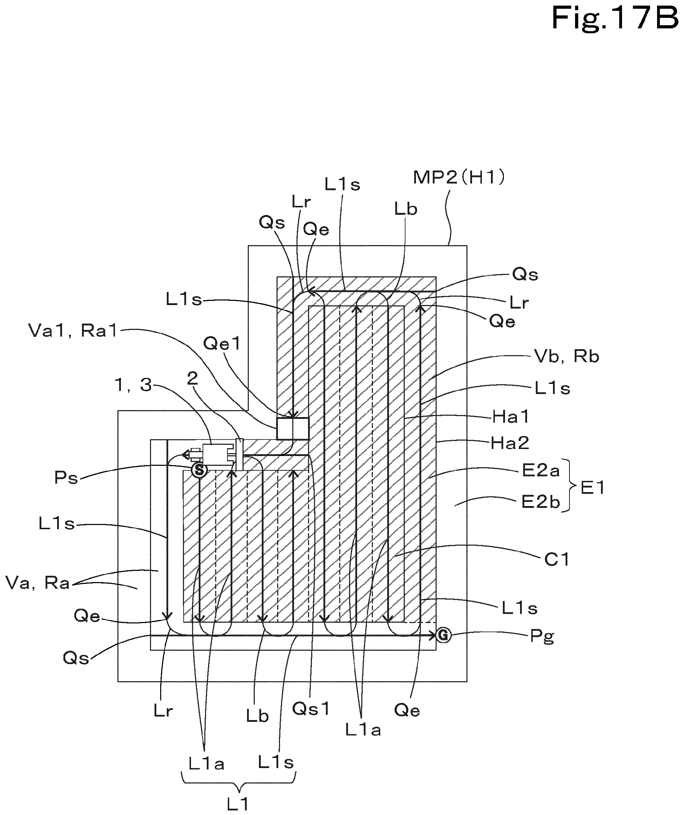

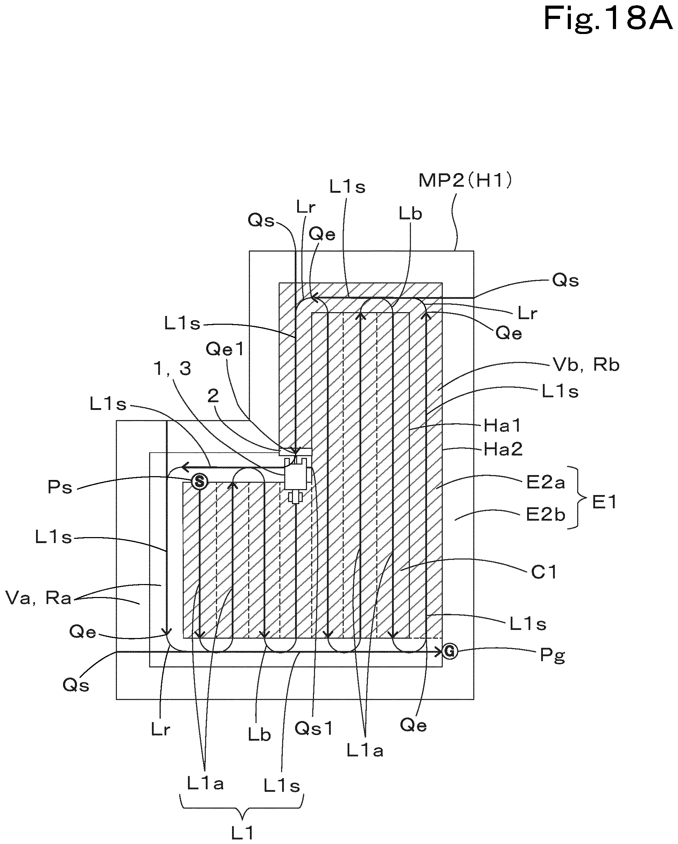

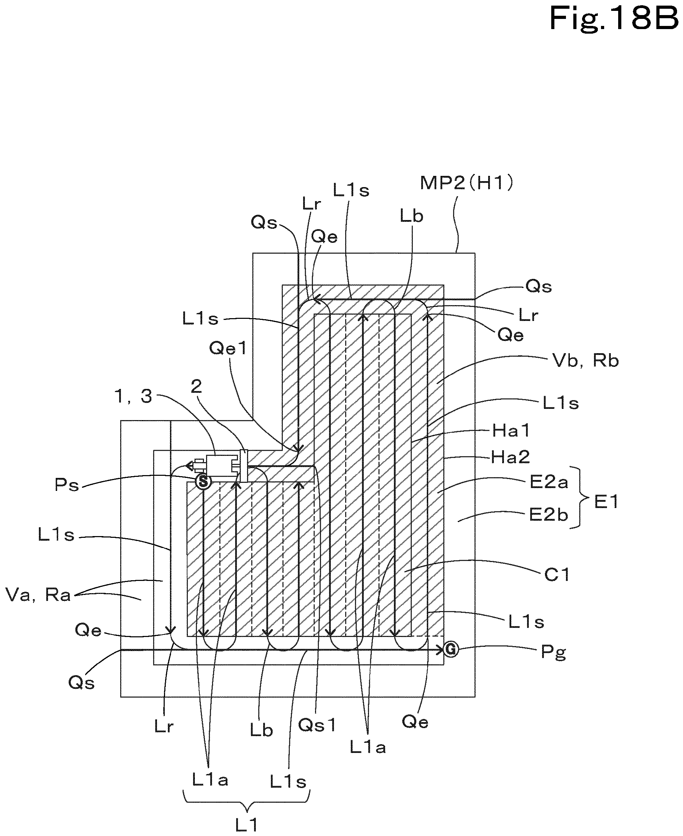

FIGS. 17A and 17B illustrate another example of the traveling route L1 and a work state during automatic driving of the agricultural machine 1 in a case where the performance priority mode is selected. FIGS. 18A and 18B illustrate another example of the traveling route L1 and a work state during automatic driving of the agricultural machine 1 in a case where the efficiency priority mode is selected. FIGS. 17A to 18B illustrate a state where the traveling route L1 has been created on the agricultural field map MP2 indicating an agricultural field having a contour that is partially recessed inward. FIGS. 17A to 18B illustrate a virtual work state and a work state during automatic driving together for convenience. In FIGS. 17A to 18B, as work conditions, cultivation work is selected as agricultural work performed in a corresponding agricultural field, performing the agricultural work on the central area C1 and the headland area E1 of the agricultural field map MP2 while automatically driving the agricultural machine 1 is selected, performing the agricultural work on the central area C1 earlier and performing the agricultural work on the headland area E1 later is selected, the number of headlands is set to two, and performing the agricultural work on the headland E2a of the headland area E1 while automatically driving the agricultural machine 1 is set.

In a case where the performance priority mode is further selected as a work condition, the route creator 51c creates a plurality of work lines L1a in the central area C1 of the agricultural field map MP2 and creates a plurality of work lines L1s in the inner headland E2a of the headland area E1 as the traveling route L1 according to the performance priority mode, as illustrated in FIG. 17A. Furthermore, the route creator 51c sequentially creates the work lines L1s and adjusts a start position or an end position of each work line L1s so that the agricultural machine 1 preferentially enters the virtual unfinished region Va while avoiding entry into the virtual finished region Vb as much as possible in the virtual work state in the inner headland E2a. More specifically, the route creator 51c sequentially creates the work lines L1s so that one work line L1s and another work line L1s are prevented as much as possible from partially overlapping each other or becoming close to each other by less than a predetermined interval.

In a portion of the headland E2a that is not recessed inward, the route creator 51c sets the start position Qs and the end position Qe of the work line L1s on the outer contour Ha2 of the headland E2a or at a position aligned, in the width direction of the headland E2a, with a corner portion of the inner contour Ha1 of the headland E2a.

On the other hand, in a portion of the headland E2a that is recessed inward, the route creator 51c sets an end position Qe1 of the work line L1s at a position closer to the start position Qs of the work line L1s than a corner portion of the inner contour Ha1 of the headland E2a so that entry of the agricultural machine 1 into the virtual finished region Vb is avoided. Furthermore, the route creator 51c sets a start position Qs 1 of a next work line L1s on the inner contour Ha1 of the headland E2a, that is, on a boundary between the virtual finished region Vb and the virtual unfinished region Va. Then, after creating the plurality of work lines L1a and L1s in the central area C1 and the headland area E1, the route creator 51c determines an order in which the agricultural machine 1 travels along the plurality of work lines L1a and L1s.

After the traveling route L1 is created in accordance with the performance priority mode as described above, the automatic controller 61 performs automatic driving of the agricultural machine 1 based on the traveling route L1, the position of the traveling body 3, the performance priority mode, and the like, and therefore entry of the agricultural machine 1 into the finished region Rb is avoided as much as possible in the agricultural field, as illustrated in FIG. 17B. This achieves good performance of the cultivation work, but leaves an unnecessary unfinished region Ra1 in the portion of the headland E2a that is recessed inward.

On the other hand, in a case where the efficiency priority mode is selected as a work condition instead of the performance priority mode, the route creator 51c creates a plurality of work lines L1a in the central area C1 of the agricultural field map MP2 and creates a plurality of work lines L1s in the inner headland E2a of the headland area E1 as the traveling route L1 according to the efficiency priority mode, as illustrated in FIG. 18A. Furthermore, the route creator 51c sequentially creates the work lines L1s and adjusts the start position Qs or the end position Qe of each work line L1s so that entry of the agricultural machine 1 into the virtual finished region Vb and the virtual unfinished region Va is permitted in the virtual work state in the headland E2a. More specifically, the route creator 51c sequentially creates the work lines L1s while permitting one work line L1s and another work line L1s to partially overlap each other or become close to each other by less than a predetermined interval.

In the portion of the headland E2a that is not recessed inward, the route creator 51c sets the start position Qs of the work line L1s between the contour H1 of the agricultural field in the agricultural field map MP2 and the outer contour Ha2 of the headland E2a. In the example of FIGS. 18A and 18B, the route creator 51c sets the start position Qs of the work line L1s on the contour H1 of the agricultural field. Furthermore, the route creator 51c sets the end position Qe of the work line L1s at a position aligned, in the width direction of the headland E2a, with a corner portion of the inner contour Ha1 of the headland E2a or on the outer contour Hb2 of the headland E2a.

On the other hand, in the portion of the headland E2a that is recessed inward, the route creator 51c sets the end position Qe1 of the work line L1s at a position aligned, in the width direction of the headland E2a, with a corner portion of the inner contour Ha1 of the headland E2a so that entry of the agricultural machine 1 into the virtual finished region Vb and the virtual unfinished region Va is permitted. Furthermore, the route creator 51c sets the start position Qs1 of the next work line L1s on the inner contour Ha1 of the headland E2a, that is, on a boundary between the virtual finished region Vb and the virtual unfinished region Va. Then, after creating the plurality of work lines L1a and L1s in the central area C1 and the headland area E1, the route creator 51c determines an order in which the agricultural machine 1 travels along the plurality of work lines L1a and L1s.

After the traveling route L1 is created in accordance with the efficiency priority mode as described above, the automatic controller 61 performs automatic driving of the agricultural machine 1 based on the traveling route L1, the position of the traveling body 3, the efficiency priority mode, and the like. Therefore, as illustrated in FIG. 18B, entry of the agricultural machine 1 into the finished region Rb and the unfinished region Ra is permitted in the agricultural field. This leaves no unnecessary unfinished region (the unnecessary unfinished region Ra1 of FIG. 17B) in the headland E2a, thereby improving efficiency of the agricultural work.

Although the mode selector 5 1d selects either the performance priority mode or the efficiency priority mode in accordance with user's operation of the priority mode key B43d on the route creation 1 screen D6 (FIG. 7) in the above embodiment, this is not restrictive. Alternatively, for example, the mode selector 51d may automatically select either the performance priority mode or the efficiency priority mode in accordance with a kind of agricultural work performed by the working device 2.

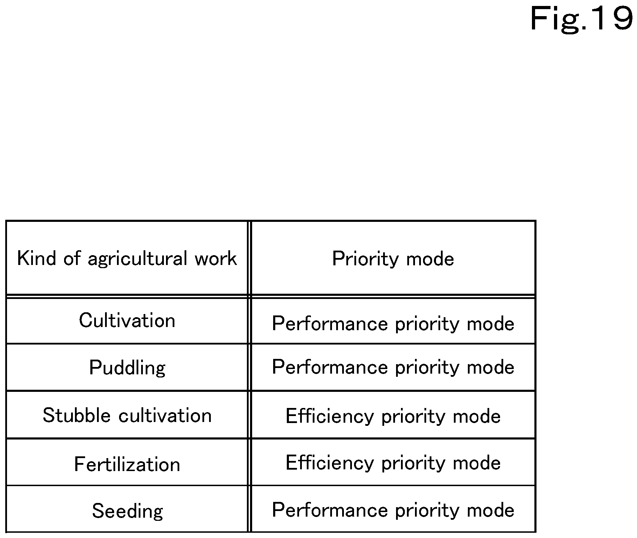

FIG. 19 illustrates a correspondence relationship between the priority mode and a kind of agricultural work. Data of the table illustrated in FIG. 19 is stored in advance in the storage 53. The mode selector 51d determines a kind of agricultural work performed by the working device 2, for example, based on a selection result on the work selection screen D3 (FIG. 4). Alternatively, the mode selector 51d determines the kind of agricultural work performed by the working device 2 based on the device-specific information of the working device 2 coupled to the agricultural machine 1. Then, the mode selector 51d selects (determines) a priority mode corresponding to the kind of agricultural work based on the data of the table of FIG. 19. Specifically, in a case where the kind of agricultural work is cultivation work, puddling work, or seeding work that involves land leveling of an agricultural field, the mode selector 51d selects the performance priority mode. In a case where the kind of agricultural work is stubble cultivation work or fertilizing work that does not involve land leveling of an agricultural field, the mode selector 51d selects the efficiency priority mode. Note that work that involves land leveling of an agricultural field includes work (e.g., cultivation work, puddling work) of leveling the agricultural field and work (e.g., seeding work) performed while keeping the leveled state of the agricultural field as much as possible.

Kinds of agricultural work performed by the working device 2 are not limited to those described above. Agricultural work other than those described above may be performed by a corresponding working device 2 and the mode selector 51d may select either the performance priority mode or the efficiency priority mode in accordance with a kind of the agricultural work. Furthermore, the area order selector 51e may select in which of the central area C1 and the headland area E1 agricultural work is performed earlier and in which of the central area C1 and the headland area E1 the agricultural work is performed later in accordance with a kind of agricultural work performed by the working device 2.

Not only in a case where cultivation work, puddling work, stubble cultivation work, fertilizing work, or seeding work, which is ground work performed on soil of an agricultural field, is performed, but also in a case where agricultural work performed on crops grown in the agricultural field such as harvesting work is performed by the agricultural machine 1 and the working device 2, either the performance priority mode or the efficiency priority mode may be selectable. However, in a case of the harvesting work, when creating the traveling route L1 on the agricultural field map MP2 upon selection of the performance priority mode, the route creator 51c continues to create the traveling route L1 so that the agricultural machine 1 enters a virtual finished region where the harvesting work has been already performed while avoiding entry into a virtual unfinished region where the harvesting work has not been performed yet as much as possible in a virtual work state. On the other hand, when creating the traveling route L1 on the agricultural field map MP2 upon selection of the efficiency priority mode, the route creator 51c continues to create the traveling route L1 so that entry of the agricultural machine 1 into the virtual unfinished region and the virtual finished region is permitted in the virtual work state.

Although an example in which an order of the plurality of work lines L1a and L1s included in the traveling route L1 is determined after adjusting the start positions Qs or Qs1 and the end positions Qe or Qe1 of the plurality of work lines L1a and L1s in the above embodiment, for example, the start positions Qs or Qs1 and the end positions Qe or Qe1 of the work lines L1a and L1s may be adjusted after determining the order of the plurality of work lines L1a and L1s.

Although an example in which the agricultural machine 1 is automatically driven based on the traveling route L1 has been described in the above embodiment, the agricultural machine 1 may be automatically steered or the agricultural machine 1 may be manually driven based on the traveling route L1. That is, the traveling route created by the route creator 51c can be used not only for automatic driving of the agricultural machine 1, but also for automatic steering and manual driving of the agricultural machine 1.

Although an example in which the area setter 51b, the route creator 51c, the mode selector 51d, and the area order selector 51e are provided in the control unit 51 of the agricultural work assistance device 50 has been illustrated in the above embodiment, for example, at least one of the units 51b to 51e may be provided in the controller 60 of the agricultural machine 1 or may be provided as a device separate from the controller 60. The storage 53 may be provided in the controller 60 included in the agricultural machine 1 instead of the agricultural work assistance device 50 or may be provided in an electronic device such as a PC provided in the agricultural machine 1 or on a cloud. In addition to the display operating unit 52 and the communicator 54 provided in the agricultural work assistance device 50, an input unit, a display unit, or an output unit may be provided by a communication circuit, an input interface, a display, a touch pad, a key, or an output interface mounted in the agricultural machine 1.

The agricultural work assistance device 50 is not limited to a mobile tablet terminal device and may be, for example, a smartphone or a terminal device fixed to the agricultural machine 1. Alternatively, for example, the agricultural work assistance device may be an electronic device such as a PC that is not mounted in the agricultural machine 1 such as a server on a cloud. Instead of the agricultural work assistance device, an application program that can be acquired from a cloud and installed, for example, by a user's electronic device may be included in the agricultural work assistance system. In this case, the area setter 51b, the route creator 51c, the mode selector 51d, and the area order selector 51e may be realized by the application program, and the traveling route L1 may be displayed on a display unit included in an electronic device in which the application program is installed or on a display connected to the electronic device. Alternatively, information on the traveling route L1 may be transmitted to the automatic controller 61 of the agricultural machine 1 from an electronic device in which the application program is installed.

An agricultural work assistance system 100, an agricultural machine 1, and an agricultural work assistance device 50 of the present embodiment described above have the following configurations and produce the following effects.

In the present embodiment, an agricultural work assistance system 100 and an agricultural work assistance device 50 each include: a route creator 51c to create, on a map (agricultural field map) MP2 indicating an agricultural field, a traveling route L1 along which an agricultural machine 1 travels; and a mode selector 51d to select either a first priority mode (performance priority mode) in which priority is placed on improving performance of agricultural work which the agricultural machine 1 performs on the agricultural field by the working device 2 coupled to the agricultural machine 1 while traveling based on the traveling route L1 or a second priority mode (efficiency priority mode) in which priority is placed on improving efficiency of the agricultural work.

In the present embodiment, the agricultural machine 1 includes: a vehicle body (traveling body) 3 that is capable of traveling; a coupler 8g, 8h to couple a working device 2 to the vehicle body 3; the route creator 51c to create the traveling route L1 along which the vehicle body 3 travels on the map MP2 indicating an agricultural field; and the mode selector 51d to select either a first priority mode (performance priority mode) in which priority is placed on improving performance of agricultural work performed on the agricultural field by the working device 2 coupled to the vehicle body 3 while allowing the vehicle body 3 to travel based on the traveling route L1 or a second priority mode (efficiency priority mode) in which priority is placed on improving efficiency of the agricultural work.

The route creator 51c is configured to: in a case where the first priority mode (performance priority mode) is selected by the mode selector 51d, during creation of the traveling route L1, continuously create the traveling route L1 so that, in a virtual work state where the agricultural machine 1 (the vehicle body 3) has virtually performed the agricultural work by the working device 2 while traveling based on the traveling route L1 that has been already created, the agricultural machine 1 is prevented (or prevented as much as possible (substantially)) from entering one of a virtual finished region Vb where the agricultural work has been already performed and a virtual unfinished region Va where the agricultural work has not been performed yet, the one of the virtual finished region Vb and the virtual unfinished region Va being determined according to a kind of the agricultural work; and in a case where the second priority mode (efficiency priority mode) is selected by the mode selector 51d, during creation of the traveling route L1, continuously create the traveling route L1 so that, in the virtual work state, the agricultural machine 1 is allowed to enter the virtual finished region Vb and enter the virtual unfinished region Va.

According to the above configuration, in a case where the first priority mode (performance priority mode), the traveling route L1 is created so that entry of the agricultural machine 1 into one of the virtual finished region Vb and the virtual unfinished region Va in the map MP2 is avoided as much as possible (substantially), and the one of the virtual finished region Vb and the virtual unfinished region Va is determined according to a kind of the agricultural work. Accordingly, in a case where the agricultural machine 1 performs agricultural work by the working device 2 while traveling based on the traveling route L1 according to the first priority mode, entry of the agricultural machine 1 into one of the finished region Rb and the unfinished region Ra which one is a region of the agricultural field determined according to a kind of the agricultural work is avoided as much as possible. This can improve performance (visual quality, finish quality) of the agricultural work. In a case where the second priority mode (efficiency priority mode) is selected, the traveling route L1 is created with high flexibility so that entry of the agricultural machine 1 into the virtual finished region Vb and the virtual unfinished region Va in the map MP2 is permitted. Accordingly, in a case where the agricultural machine 1 performs agricultural work by the working device 2 while traveling based on the traveling route L1 according to the second priority mode, entry of the agricultural machine 1 into the finished region Rb and the unfinished region Ra of the agricultural field is permitted. This can increase flexibility of traveling and turning of the agricultural machine 1, thereby improving efficiency of the agricultural work. Since either performance or efficiency of the agricultural work performed in the agricultural field can be improved in accordance with a result of selection of the first priority mode or the second mode, convenience can be improved.

In the present embodiment, the route creator 51c is configured to: in a case where the first priority mode (performance priority mode) is selected by the mode selector 51d, during creation of a plurality of work lines L1a and L1s on the map MP2 to constitute the traveling route L1, sequentially create the work lines L1a and L1s and adjust start positions Qs or end positions Qe of the respective work lines L1a and L1s so that, in a virtual work state where the agricultural machine 1 has virtually performed the agricultural work by the working device 2 while traveling based on the work lines L1a and L1s that have been already created, the agricultural machine 1 is prevented (or prevented as much as possible) from entering one of the virtual finished region Vb and the virtual unfinished region Va, the one of the virtual finished region Vb and the virtual unfinished region Va being determined according to a kind of the agricultural work, and is caused to preferentially enter the other one of the virtual finished region Vb and the virtual unfinished region Va; and in a case where the second priority mode (efficiency priority mode) is selected by the mode selector 51d, during creation of the plurality of work lines L1a and L1s on the map M2, sequentially create the work lines L1a and L1s and adjust start positions Qs or send positions Qe of the respective work lines L1a and L1s so that, in the virtual work state, the agricultural machine 1 is allowed to enter the virtual finished region Vb and enter the virtual unfinished region Va. With this configuration, the traveling route L1 including the plurality of work lines L1a and L1s is created as appropriate in accordance with a result of selection of the first priority mode or the second mode. This can improve performance or efficiency of the agricultural work performed on the agricultural field.

In the present embodiment, the route creator 51c is configured to, in a case where the second priority mode (efficiency priority mode) is selected by the mode selector 51d, create the traveling route L1 so that, in the virtual work state, the agricultural machine 1 is caused to travel irrespective of whether it is in the virtual finished region Vb or the virtual unfinished region Va, thereby avoiding (or avoiding as much as possible) occurrence of an unnecessary virtual unfinished region Va1 (corresponding to an unnecessary unfinished region Ra1). With this configuration, no unnecessary unfinished region Ra1 remains in the agricultural field in a case where the agricultural machine 1 performs the agricultural work by the working device 2 while traveling based on the traveling route L1 according to the second priority mode. This makes it unnecessary to separately perform agricultural work on the unnecessary unfinished region Ra1 by the agricultural machine 1, the working device 2, and the like, thereby improving efficiency of the agricultural work.

In the present embodiment, the route creator 51c is configured to: in a case where the first priority mode (performance priority mode) is selected by the mode selector 51d and the agricultural work is ground work performed on soil of the agricultural field, during creation of the traveling route L1, continuously create the traveling route L1 so that, in the virtual work state, the agricultural machine 1 is prevented (or prevented as much as possible) from entering the virtual finished region Vb and is caused to preferentially enter the virtual unfinished region Va. With this configuration, in a case where the agricultural machine 1 performs ground work by the working device 2 while traveling based on the traveling route L1 according to the first priority mode, entry of the agricultural machine 1 into the finished region Rb of the agricultural field is avoided as much as possible. This can improve performance of the ground work.

In the present embodiment, in a case where the agricultural work is ground work performed on soil of the agricultural field, the route creator 51c is configured to: upon selection of the first priority mode (performance priority mode) by the mode selector 51d, create the traveling route L1 so that one portion (one work line L1s) and another portion (another work line L1s) of the traveling route L1 are prevented (or prevented as much as possible) from partially overlapping each other or becoming close to each other by less than a predetermined interval; and upon selection of the second priority mode (efficiency priority mode) by the mode selector 51d, create the traveling route L1 so that one portion and another portion of the traveling route are permitted to overlap each other or becoming close to each other by less than a predetermined interval. With this configuration, in a case where the agricultural machine 1 performs ground work by the working device 2 while traveling based on the traveling route L1 according to the first priority mode, entry of the agricultural machine 1 into the finished region Rb of the agricultural field is avoided as much as possible. This can improve performance of the ground work. Furthermore, in a case where the agricultural machine 1 performs ground work by the working device 2 while traveling based on the traveling route L1 according to the second priority mode, the agricultural machine 1 enters the finished region Rb and the unfinished region Ra of the agricultural field as appropriate. This can increase flexibility of traveling and turning of the agricultural machine 1, thereby improving efficiency of the agricultural work.

In the present embodiment, the agricultural work assistance system 100, the agricultural work assistance device 50, and the agricultural machine 1 each include an area setter 51b to set, on the map M2, the headland area E1 and the central area C1 located inside the headland area E1 on the map MP2. The route creator 51c is configured to create, in the headland area E1 and the central area C 1, the traveling route L1 including a plurality of work lines 11a and L1s in accordance with a selection result of the mode selector 51d, and in a case where the second priority mode (efficiency priority mode) is selected by the mode selector 51d, determine a start position Qs of each work line L1s created in the headland area E1 between a contour H1 of the agricultural field in the map MP2 and an outer contour Hb2, Ha2 of a region (the headland E2a, E2b) where the agricultural work is performed in the headland area E1. With this configuration, in a case where the agricultural machine 1 performs the agricultural work by the working device 2 while traveling based on the traveling route L1 according to the second priority mode, no unnecessary unfinished region Ra1 remains in the agricultural field even in a case where the traveling of the agricultural machine 1 and the agricultural work of the working device 2 are stopped so that the agricultural machine does not go beyond the agricultural field. This makes it unnecessary to separately perform agricultural work on the unnecessary unfinished region Ra1 by the agricultural machine 1, the working device 2, and the like, thereby improving efficiency of the agricultural work.

In the present embodiment, the agricultural work assistance system 100, the agricultural work assistance device 50, and the agricultural machine 1 each include an area order selector 51e to select in which of the headland area E1 and the central area C1 the agricultural work is performed earlier and in which of the headland area E1 and the central area C1 the agricultural work is performed later. The route creator 51c is configured to create the traveling route L1 including the plurality of work lines L1s and L1a in the headland area E1 and the central area C1, and determine an order in which the agricultural machine 1 travels along the plurality of work lines L1s and L1a in accordance with selection results of the mode selector 51d and the area order selector 51e. This makes it possible to select an order in which the agricultural work is performed on the headland area E1 and the central area C1 of the agricultural field, thereby improving convenience. Furthermore, efficiency or performance of the agricultural work performed by the working device 2 can be improved by causing the agricultural machine 1 to travel based on the plurality of work lines L1s and L1a in the order determined by the route creator 51c.

In the present embodiment, the agricultural work assistance system 100, the agricultural work assistance device 50, and the agricultural machine 1 each include an input unit (the display operating unit) 52 by which a user performs input operation for designating either the first priority mode (performance priority mode) or the second priority mode (efficiency priority mode). The mode selector 51d is configured to select either the first priority mode or the second priority mode in accordance with the input operation of the input unit 52. This allows the user to freely select whether to place priority on performance or place priority on efficiency in the agricultural work performed on the agricultural field by the agricultural machine 1 and the working device 2, thereby improving convenience.

In the present embodiment, the mode selector 51d is configured to select either the first priority mode (performance priority mode) or the second priority mode (efficiency priority mode) in accordance with a kind of the agricultural work performed by the working device 2. With this configuration, whether to place priority on performance or place priority on efficiency in the agricultural work performed on the agricultural field by the agricultural machine 1 and the working device 2 is automatically selected in accordance with the kind of the agricultural work. This can improve convenience.

In the present embodiment, the agricultural work assistance system 100 and the agricultural machine 1 each include: a position detector (positioning device) 40 to detect a position of the agricultural machine 1 (the traveling body 3); and an automatic controller 61 to perform automatic driving of performing the agricultural work on the agricultural field by the working device 2 while automatically performing traveling and steering of the agricultural machine 1 based on the position of the agricultural machine 1 and the traveling route L1. The automatic controller 61 is configured or programmed to: in a case where the first priority mode (performance priority mode) is selected by the mode selector 51d, during execution of the automatic driving in the agricultural field, cause the agricultural machine 1 to avoid (or avoid as much as possible) entry thereof into one of a finished region Rb where the agricultural work has been already performed and an unfinished region Ra where the agricultural work has not been performed yet, the one of the finished region Rb and the unfinished region Ra being determined according to a kind of the agricultural work, and to enter and turn in the other one of the finished region Rb and the unfinished region Ra; and in a case where the second priority mode (efficiency priority mode) is selected by the mode selector 51d, during execution of the automatic driving in the agricultural field, cause the agricultural machine 1 to travel and turn irrespective of whether it is in the finished region Rb or the unfinished region Ra.

With the above configuration, in a case where automatic driving of the agricultural machine 1 based on the position of the agricultural machine 1 (the traveling body 3) and the traveling route L1 is performed in a state where the first priority mode (performance priority mode) is being selected, entry of the agricultural machine 1 into one of the finished region Rb and the unfinished region Ra which one is a region of the agricultural field determined according to the kind of the agricultural work is avoided as much as possible. This can improve performance of the agricultural work. In a case where automatic driving of the agricultural machine 1 is performed in a state where the second priority mode (efficiency priority mode) is being selected, entry of the agricultural machine 1 into the virtual finished region Vb and the virtual unfinished region Va of the agricultural field is permitted. This can increase flexibility of traveling and turning of the agricultural machine 1, thereby improving efficiency of the agricultural work. Furthermore, performance or efficiency of the agricultural work performed on the agricultural field can be improved in accordance with a result of selection of the first priority mode or the second mode. This can improve convenience.

Although the present invention has been described above, the embodiment disclosed herein is illustrative in all respects and should not be construed as being restrictive. The scope of the present invention is indicated not by the above description but by the claims, and is intended to encompass all changes within meaning and range equivalent to the claims.

### Reference Signs List

1 agricultural machine
2 working device
3 traveling body
8g,8h coupler
40 positioning device (position detector)
50 agricultural work assistance device
51b area setter
51c route creator
51d mode selector
51e area order selector
52 display operating unit (input unit)
61 automatic controller
100 agricultural work assistance system
C1 central area
E1 headland area
E2a,E2b headland
H1 contour of agricultural field
Ha1,Hb1 inner contour of headland
Ha2,Hb2 outer contour of headland
L1 traveling route
L1a,L1s work line
MP2 agricultural field map
Qe,Qe1 end position
Qs,Qs1 start position
Ra unfinished region
Ra1 unnecessary unfinished region
Rb finished region
Va virtual unfinished region
Va1 unnecessary virtual unfinished region
Vb virtual finished region

## Claims

1. An agricultural work assistance system comprising:
a route creator to create, on a map indicating an agricultural field, a traveling route along which an agricultural machine travels; and
a mode selector to select either a first priority mode in which priority is placed on improving performance of agricultural work which the agricultural machine performs on the agricultural field by a working device coupled to the agricultural machine while traveling based on the traveling route or a second priority mode in which priority is placed on improving efficiency of the agricultural work, wherein
the route creator is configured to:
in a case where the first priority mode is selected by the mode selector, during creation of the traveling route, continuously create the traveling route so that, in a virtual work state where the agricultural machine has virtually performed the agricultural work by the working device while traveling based on the traveling route that has been already created, the agricultural machine is prevented from entering one of a virtual finished region where the agricultural work has been already performed and a virtual unfinished region where the agricultural work has not been performed yet, the one of the virtual finished region and the virtual unfinished region being determined according to a kind of the agricultural work; and
in a case where the second priority mode is selected by the mode selector, during creation of the traveling route, continuously create the traveling route so that, in the virtual work state, the agricultural machine is allowed to enter the virtual finished region and enter the virtual unfinished region.

2. The agricultural work assistance system according to claim 1, wherein
the route creator is configured to:
in a case where the first priority mode is selected by the mode selector, during creation of a plurality of work lines on the map to constitute the traveling route, sequentially create the work lines and adjust start positions or end positions of the respective work lines so that, in a virtual work state where the agricultural machine has virtually performed the agricultural work by the working device while traveling based on the plurality of work lines that have been already created, the agricultural machine is prevented from entering one of the virtual finished region and the virtual unfinished region, the one of the virtual finished region and the virtual unfinished region being determined according to a kind of the agricultural work, and is caused to preferentially enter the other one of the virtual finished region and the virtual unfinished region; and
in a case where the second priority mode is selected by the mode selector, during creation of the plurality of work lines on the map, sequentially create the work lines and adjust start positions or end positions of the respective work lines so that, in the virtual work state, the agricultural machine is allowed to enter the virtual finished region and enter the virtual unfinished region.

3. The agricultural work assistance system according to claim 1 or 2, wherein
the route creator is configured to, in a case where the second priority mode is selected by the mode selector, create the traveling route so that, in the virtual work state, the agricultural machine is caused to travel irrespective of whether it is in the virtual finished region or the virtual unfinished region, thereby avoiding occurrence of an unnecessary virtual unfinished region.

4. The agricultural work assistance system according to any one of claims 1 to 3, wherein
the route creator is configured to, in a case where the first priority mode is selected by the mode selector and the agricultural work is ground work performed on soil of the agricultural field, during creation of the traveling route, continuously create the traveling route so that, in the virtual work state, the agricultural machine is prevented from entering the virtual finished region and is caused to preferentially enter the virtual unfinished region.

5. The agricultural work assistance system according to any one of claims 1 to 4, wherein
in a case where the agricultural work is ground work performed on soil of the agricultural field, the route creator is configured to:
upon selection of the first priority mode by the mode selector, create the traveling route so that one portion and another portion of the traveling route are prevented from partially overlapping each other or becoming close to each other by less than a predetermined interval; and
upon selection of the second priority mode by the mode selector, create the traveling route so that one portion and another portion of the traveling route are permitted to overlap each other or becoming close to each other by less than a predetermined interval.

6. The agricultural work assistance system according to any one of claims 1 to 5, further comprising an area setter to set, on the map, a headland area and a central area located inside the headland area, wherein
the route creator is configured to:
create, in the headland area and the central area, the traveling route including a plurality of work lines in accordance with a selection result of the mode selector; and
in a case where the second priority mode is selected by the mode selector, determine a start position of each work line created in the headland area between a contour of the agricultural field in the map and an outer contour of a region where the agricultural work is performed in the headland area.

7. The agricultural work assistance system according to claim 6, further comprising an area order selector to select in which of the headland area and the central area the agricultural work is performed earlier and in which of the headland area and the central area the agricultural work is performed later, wherein
the route creator is configured to create the traveling route including the plurality of work lines in the headland area and the central area, and determine an order in which the agricultural machine travels along the plurality of work lines in accordance with selection results of the mode selector and the area order selector.

8. The agricultural work assistance system according to any one of claims 1 to 7, further comprising an input unit by which a user performs input operation for designating either the first priority mode or the second priority mode, wherein
the mode selector is configured to select either the first priority mode or the second priority mode in accordance with the input operation of the input unit.

9. The agricultural work assistance system according to any one of claims 1 to 7, wherein
the mode selector is configured to select either the first priority mode or the second priority mode in accordance with a kind of the agricultural work performed by the working device.

10. The agricultural work assistance system according to any one of claims 1 to 9, further comprising:
a position detector to detect a position of the agricultural machine; and
an automatic controller to perform automatic driving of performing the agricultural work on the agricultural field by the working device while automatically performing traveling and steering of the agricultural machine based on the position of the agricultural machine and the traveling route, wherein
the automatic controller is configured or programmed to:
in a case where the first priority mode is selected by the mode selector, during execution of the automatic driving in the agricultural field, cause the agricultural machine to avoid entry thereof into one of a finished region where the agricultural work has been already performed and an unfinished region where the agricultural work has not been performed yet, the one of the finished region and the unfinished region being determined according to a kind of the agricultural work, and to enter and turn in the other one of the finished region and the unfinished region; and
in a case where the second priority mode is selected by the mode selector, during execution of the automatic driving in the agricultural field, cause the agricultural machine to travel and turn irrespective of whether it is in the finished region or the unfinished region.

11. An agricultural machine comprising:
a vehicle body that is capable of traveling;
a coupler to couple a working device to the vehicle body;
a route creator to create, on a map indicating an agricultural field, a traveling route along which the vehicle body travels; and
a mode selector to select either a first priority mode in which priority is placed on improving performance of agricultural work performed on the agricultural field by the working device coupled to the vehicle body while allowing the vehicle body to travel based on the traveling route or a second priority mode in which priority is placed on improving efficiency of the agricultural work, wherein
the route creator is configured to:
in a case where the first priority mode is selected by the mode selector, during creation of the traveling route, continuously create the traveling route so that, in a virtual work state where the agricultural work has been virtually performed by the working device while allowing the vehicle body to travel based on the traveling route that has been already created, the vehicle body is prevented from entering one of a virtual finished region where the agricultural work has been already performed and a virtual unfinished region where the agricultural work has not been performed yet, the one of the virtual finished region and the virtual unfinished region being determined according to a kind of the agricultural work; and
in a case where the second priority mode is selected by the mode selector, during creation of the traveling route, continuously create the traveling route so that, in the virtual work state, the agricultural machine is allowed to enter the virtual finished region and enter the virtual unfinished region.

12. The agricultural machine according to claim 11, further comprising:
a position detector to detect a position of the vehicle body; and
an automatic controller to perform automatic driving of performing agricultural work on the agricultural field by the working device while automatically performing traveling and steering of the vehicle body based on the position of the vehicle body and the traveling route, wherein
the automatic controller is configured or programmed to:
in a case where the first priority mode is selected by the mode selector, during execution of the automatic driving in the agricultural field, cause the vehicle body to avoid entry thereof into one of a finished region where the agricultural work has been already performed and an unfinished region where the agricultural work has not been performed yet, the one of the finished region and the unfinished region being determined according to a kind of the agricultural work, and to enter and turn in the other one of the finished region and the unfinished region; and
in a case where the second priority mode is selected by the mode selector, during execution of the automatic driving in the agricultural field, cause the vehicle body to travel and turn irrespective of whether it is in the finished region or the unfinished region.

13. An agricultural work assistance device comprising:
a route creator to create, on a map indicating an agricultural field, a traveling route along which an agricultural machine travels; and
a mode selector to select either a first priority mode in which priority is placed on improving performance of agricultural work which the agricultural machine performs on the agricultural field by a working device coupled to the agricultural machine while traveling based on the traveling route or a second priority mode in which priority is placed on improving efficiency of the agricultural work, wherein
the route creator is configured to:
in a case where the first priority mode is selected by the mode selector, during creation of the traveling route, continuously create the traveling route so that, in a virtual work state where the agricultural machine has virtually performed the agricultural work by the working device while traveling based on the traveling route that has been already created, the agricultural machine is prevented from entering one of a virtual finished region where the agricultural work has been already performed and a virtual unfinished region where the agricultural work has not been performed yet, the one of the virtual finished region and the virtual unfinished region being determined according to a kind of the agricultural work; and
in a case where the second priority mode is selected by the mode selector, during creation of the traveling route, continuously create the traveling route so that, in the virtual work state, the agricultural machine is allowed to enter the virtual finished region and enter the virtual unfinished region.

14. A method to create, on a map indicating an agricultural field, a traveling route along which an agricultural machine travels to perform agricultural work on the agricultural field by a working device coupled to the agricultural machine, the method comprising:
causing a mode selector to select, as a mode in which the agricultural machine performs the agricultural work by the working device while traveling, either a first priority mode in which priority is placed on improving performance of the agricultural work or a second priority mode in which priority is placed on improving efficiency of the agricultural work; and
causing a route creator to create the traveling route on the map, wherein
in a case where the first priority mode is selected by the mode selector, during creation of the traveling route, the route creator is caused to continuously create the traveling route so that, in a virtual work state where the agricultural machine has virtually performed the agricultural work by the working device while traveling based on the traveling route that has been already created, the agricultural machine is prevented from entering one of a virtual finished region where the agricultural work has been already performed and a virtual unfinished region where the agricultural work has not been performed yet, the one of the virtual finished region and the virtual unfinished region being determined according to a kind of the agricultural work, and
in a case where the second priority mode is selected by the mode selector, during creation of the traveling route, the route creator is caused to continuously create the traveling route so that, in the virtual work state, the agricultural machine is allowed to enter the virtual finished region and enter the virtual unfinished region.
